# EUROPEAN PATENT APPLICATION

(11) **EP 4 733 997 A1**
(43) Date of publication of application: **29.04.2026**
(21) Application number: 24863182.2
(22) Date of filing: 04.09.2024
(51) Int. Cl.: G06N 3/0475, G06N 3/0455, G06N 3/094, G06N 3/088, G06T 5/77, G06T 5/70, G06T 5/60, G06F 40/279, G06T 11/60

(54) **METHOD FOR GENERATING PARTIAL REGION OF IMAGE BY USING GENERATIVE MODEL, AND ELECTRONIC DEVICE FOR PERFORMING SAME**

(30) Priority: 04.09.2023 KR 20230117238; 14.12.2023 KR 20230182370; 16.01.2024 KR 20240006753
(71) Applicant: Samsung Electronics Co., Ltd., Suwon-si, Gyeonggi-do 16677 (KR)
(72) Inventor: CHO, Hochul, Suwon-si, Gyeonggi-do 16677 (KR); KONG, Naejin, Suwon-si, Gyeonggi-do 16677 (KR); LEE, Tammy, Suwon-si, Gyeonggi-do 16677 (KR); AHN, Beomjin, Suwon-si, Gyeonggi-do 16677 (KR); LEE, Yujeong, Suwon-si, Gyeonggi-do 16677 (KR); JUNG, Jinki, Suwon-si, Gyeonggi-do 16677 (KR)
(74) Representative: Gulde & Partner
(86) International application number: PCT/KR2024/013315
(87) International publication number: WO 2025/053602

(57) **Abstract**

Provided are a method of generating a partial area of an image by using a generative model and an electronic device for performing the method. The method of generating a partial area of an image by using a generative model includes obtaining an image comprising information of the partial area, obtaining an intermediate generated image by inputting the image into a first generative model, the intermediate generated image comprising first image information corresponding to the partial area, and obtaining a final generated image comprising second image information by inputting the image and the intermediate generated image to a second generative model, the second image information being at least partially different from the first image information.

## Description

### TECHNICAL FIELD

The disclosure relates to a method of processing an image, and in particular, to a method of generating an image by using a generative model and an electronic device for performing the method.

### BACKGROUND ART

Generative artificial intelligence (Al) technology refers to technology that is trained about patterns and structures of massive training data and generates new data similar to input data based on the patterns and the structures. In an example case in which generative artificial intelligence (Al) technology is used, an image corresponding to text may be obtained or an image may be extended to an area that was not included in an original image.

Generative Al technology may be applied to image processing to support outpainting and inpainting. For example, extending an image while maintaining a style and content of the image is called outpainting, and generating an image to be filled in a specific area within an image is called inpainting.

Due to the recent development of image processing technology that emphasizes user experience, some devices or programs support a function that allows a user to change positions or sizes of objects included in an image. However, when the objects do not match the surroundings in the image after the objects are changed, user satisfaction may decrease.

### DISCLOSURE OF INVENTION

### SOLUTION TO PROBLEM

In an embodiment of the disclosure, a method of generating a partial area of an image by using a generative model may be provided. The method may include obtaining an image comprising information of the partial area, obtaining an intermediate generated image by inputting the image into a first generative model, the intermediate generated image comprising first image information corresponding to the partial area, and obtaining a final generated image comprising second image information by inputting the image and the intermediate generated image to a second generative model, the second image information being at least partially different from the first image information.

In an embodiment of the disclosure, an electronic device may be provided. The electronic device may include memory storing one or more instructions, and at least one processor, wherein the at least one processor executes the one or more instructions stored in the memory to cause the electronic device to obtain an image comprising information of a partial area, obtain an intermediate generated image by inputting the image into a first generative model, the intermediate generated image comprising first image information corresponding to the partial area, and obtain a final generated image comprising second image information by inputting the image and the intermediate generated image to a second generative model, the second image information being at least partially different from the first image information.

In an embodiment of the disclosure, there may be provided a computer-readable recording medium having recorded thereon a program for performing the method of generating a partial area of an image by using a generative model.

### BRIEF DESCRIPTION OF DRAWINGS

The disclosure may be readily understood from the following detailed description in conjunction with the accompanying drawings, and reference numerals denote structural elements.
FIG. 1 is a conceptual diagram for describing an electronic device for generating a partial area of an image by using a generative model, according to an embodiment of the disclosure.
FIG. 2 is a conceptual diagram for describing an encoder and a decoder, according to an embodiment of the disclosure.
FIG. 3 is a conceptual diagram for describing a mask map, according to an embodiment of the disclosure.
FIG. 4 is a conceptual diagram for describing an operation of a second generative model, according to an embodiment of the disclosure.
FIG. 5A is a conceptual diagram for describing text guidance input to a second generative model, according to an embodiment of the disclosure.
FIG. 5B is a conceptual diagram for describing image guidance input to a second generative model, according to an embodiment of the disclosure.
FIG. 5C is a conceptual diagram for describing text guidance and image guidance input to a second generative model, according to an embodiment of the disclosure.
FIG. 5D is a conceptual diagram for describing an embodiment in which an output of a first generative model is used as image guidance, according to an embodiment of the disclosure.
FIG. 5E is a conceptual diagram for describing an embodiment in which an output of a first generative model is used as image guidance, according to an embodiment of the disclosure.
FIG. 5F is a conceptual diagram for describing an embodiment in which an output of a first generative model is used as image guidance, together with text guidance, according to an embodiment of the disclosure.
FIG. 5G is a conceptual diagram for describing an embodiment in which an output of a first generative model is used as image guidance, together with text guidance, according to an embodiment of the disclosure.
FIG. 6 is a conceptual diagram for describing a method of training a first generative model, according to an embodiment of the disclosure.
FIGS. 7A and 7B are conceptual diagrams for describing a configuration of a second generative model, according to an embodiment of the disclosure.
FIG. 8 is a conceptual diagram for describing a configuration of an interpreter, according to an embodiment of the disclosure.
FIGS. 9A and 9B are conceptual diagrams for describing an embodiment of adding noise to an intermediate generated image, according to an embodiment of the disclosure.
FIGS. 10A to 10C are conceptual diagrams for describing an embodiment of determining a denoising strength according to the quality of an intermediate generated image, according to an embodiment of the disclosure.
FIG. 11 is a conceptual diagram for describing an electronic device for generating a partial area of an image by using a generative model, according to an embodiment of the disclosure.
FIGS. 12A and 12B are conceptual diagrams for describing a method of training a fifth encoder, according to an embodiment of the disclosure.
FIGS. 13A and 13B are conceptual diagrams for describing a method of training a fifth encoder, according to an embodiment of the disclosure.
FIG. 14 is a flowchart for describing a method of generating a partial area of an image by using a generative model, according to an embodiment of the disclosure.
FIG. 15 is a flowchart for describing detailed operations of operation S1410 of FIG. 14.
FIG. 16 is a flowchart for describing detailed operations of operation S1430 of FIG. 14.
FIG. 17 is a flowchart for describing detailed operations of operation S1430 of FIG. 14.
FIG. 18 is a flowchart for describing detailed operations of operation S1430 of FIG. 14.
FIG. 19 is a flowchart for describing detailed operations of operation S1430 of FIG. 14.
FIG. 20 is a flowchart for describing a method of training an encoder for encoding an image, according to an embodiment of the disclosure.
FIG. 21 is a flowchart for describing a method of generating a partial area of an image by using a generative model, according to an embodiment of the disclosure.
FIG. 22 is a block diagram for describing a configuration of an electronic device, according to an embodiment of the disclosure.
FIG. 23 is a block diagram for describing configurations of an electronic device and a server device, according to an embodiment of the disclosure.

### MODE FOR THE INVENTION

The terms used herein are those general terms currently widely used in the art in consideration of functions in the disclosure but the terms may vary according to the intention of one of ordinary skill in the art, precedents, or new technology in the art. Also, some of the terms used herein may be arbitrarily chosen by the present applicant, and in this case, these terms are defined in detail below. Accordingly, the specific terms used herein should be defined based on the unique meanings thereof and the whole context of the disclosure.

The singular forms "a," "an," and "the" are intended to include the plural forms as well, unless the context clearly indicates otherwise. The terms used herein, including technical or scientific terms, may have the same meaning as commonly understood by one of ordinary skill in the art described in the disclosure.

In an example case in which a portion "includes" an element, another element may be further included, rather than excluding the existence of the other element, unless otherwise described. Also, the term "... unit" or "... module" refers to a unit that performs at least one function or operation, and the unit may be implemented as hardware or software or as a combination of hardware and software.

The expression "configured (or set) to" used in the disclosure may be replaced with, for example, "suitable for," "having the capacity to," "designed to," "adapted to," "made to," or "capable of" according to a situation. The term "configured (or set) to" does not always mean only "specifically designed to" by hardware. Alternatively, in some situations, the expression "system configured to" may mean that the system is "capable of" operating together with another device or component. For example, "a processor configured (or set) to perform A, B, and C" may be a dedicated processor (e.g., an embedded processor) for performing a corresponding operation or a generic-purpose processor (e.g., a central processing unit (CPU) or an application processor) that may perform a corresponding operation by executing at least one software program stored in a memory.

Also, in the present specification, it will be understood that when elements are "connected" or "coupled" to each other, the elements may be directly connected or coupled to each other, but may alternatively be connected or coupled to each other with an intervening element therebetween, unless specified otherwise.

In the disclosure, functions related to "artificial intelligence (Al)" are performed through a processor and a memory. The processor may include one or more processors. In this case, the one or more processors may include a general-purpose processor such as a central processing unit (CPU), an application processor (AP), or a digital signal processor (DSP), a dedicated graphics processor such as a graphics processing unit (GPU) or a vision processing unit (VPU), or an Al processor such as a neural processing unit (NPU). The one or more processors control to process input data according to a predefined operation rule or an Al model stored in the memory. In another example case in which the one or more processors are Al processors, the Al processors may be designed in a hardware structure specialized in dealing with a specific Al model.

The predefined operation rule or the Al model may be made by training. Specifically, the predefined operation rule or the Al model being made by training refers to the predefined operation rule or the Al model established to perform a desired feature (or a purpose) as a basic Al model is trained using a plurality of pieces of training data according to a learning algorithm. Such training may be performed by a device itself in which Al is performed according to the disclosure or by a separate server and/or system. Examples of the learning algorithm include, but are not limited to, supervised learning, unsupervised learning, semi-supervised learning, and reinforcement learning.

In an embodiment of the disclosure, an "Al model" may include a neural network model. The neural network model may include a plurality of neural network layers. The plurality of neural network layers have a plurality of weight values, and a neural network operation is performed through an operation between an operation result of a previous layer and the plurality of weight values. The plurality of weight values of the neural network layers may be optimized by a result of training the Al model. For example, the plurality of weight values may be updated to reduce or optimize a loss value or a cost value obtained by the Al model during a training procedure. A neural network model may include a deep neural network (DNN), for example, but not limited to, a convolutional neural network (CNN), a recurrent neural network (RNN), a restricted Boltzmann machine (RBM), a deep belief network (DBN), a bidirectional recurrent deep neural network (BRDNN), or a deep Q-network.

In the disclosure, the term 'generative model' may refer to a model that generates new data based on given input data. For example, a generative model may receive various types of data (e.g., text, an image, video, sound, and random vector data). For example, the generative model may generate new text, image, video, sound, or a combination thereof. In an embodiment of the disclosure, the generative model may be an artificial intelligence (AI) model. Examples of the generative model may include, but are not limited to, a generative adversarial network (GAN) model, a variational autoencoder (VAE) model, a diffusion model, and a transformer.

In the disclosure, the term 'inpainting' may refer to an operation of performing inference on an area within an original image.

In the disclosure, the term 'outpainting' may refer to an operation of performing inference on an area outside an original image.

In the disclosure, the term 'mask' may refer to an area that requires inference (or an unknown area) among an entire area of a specific image. For example, a 'masked image' may include pixel information corresponding to an unmasked area and boundary information about an area corresponding to a mask. The pixel information may include location information of pixels (e.g., coordinate values) and color information (e.g., RGB values).

In the disclosure, the term 'mask map' may refer to data that distinguishes between a masked area and an unmasked area from among an entire area of an image. For example, a mask map may be a binary map. For example, a masked area may be expressed as a first value, and an unmasked area may be expressed as a second value.

In the disclosure, the term 'denoising' may be defined as one operation input to and output from a second generative model. In the disclosure, the term 'denoising order' may be defined as the number of times denoising is repeated. In the disclosure, the term 'total denoising order' may be defined as a hyperparameter for how many times denoising will be repeated. In an embodiment of the disclosure, a total denoising order may vary according to a user's settings or a manufacturer's settings.

In the disclosure, the term 'guidance' may refer to information indicating an image to be inferred. For example, the information may be arbitrary information indicating an image to be inferred. For example, guidance may include text guidance generated from text or image guidance generated from an image, but a type of guidance is not limited thereto. Guidance or guidance information may be input to a second generative model while a denoising operation is performed.

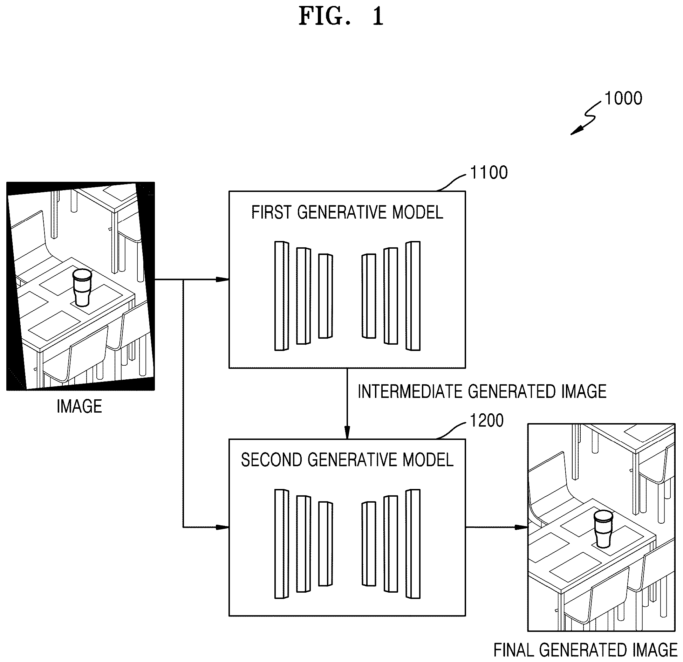

FIG. 1 is a conceptual diagram for describing an electronic device for generating a partial area of an image by using a generative model, according to an embodiment of the disclosure. Referring to FIG. 1, an electronic device 1000 may obtain a final generated image from a masked image by using a first generative model 1100 and a second generative model 1200. In an embodiment of the disclosure, each of the first generative model 1100 and the second generative model 1200 may generate an entire image by inferring an unknown area based on an image including the unknown area. For example, the first generative model 1100 may generate a first image based on an input image, and the second generative model 1200 may generate a second image based on the input image. Here, the unknown area may be an area in the input image that does not include image information or does not include image information intended by a user. Each of the first generative model 1100 and the second generative model 1200 may perform inpainting or outpainting on an input image. According to an embodiment of the disclosure, the speed and/or performance of image inference may be dramatically improved by using an output of the first generative model for an inference operation of the second generative model.

In an embodiment of the disclosure, the electronic device 1000 may be implemented as any of various types of devices. Examples of the electronic device 1000 may include, but is not limited to, a personal computer (PC), a terminal, a portable telephone, a smartphone, a tablet PC, a handheld device, a wearable device, and a server device.

The electronic device 1000 may obtain an image including information of a partial area. The partial area of the image may be predefined according to a user's settings or a manufacturer's settings. In some embodiments, the partial area may be referred to a target area or a candidate area in the image. In some embodiments, the information of the partial area may also be referred to as information about the partial area, information related to the partial area or information corresponding to the partial area. For example, the information of the partial area may include location information corresponding to the partial area and/or boundary information between the partial area of the image and an area excluding the partial area. For example, the information of the partial area may include location information of a bounding box on the image. For example, the information of the partial area may include pixel coordinate values on the image corresponding to the partial area. In an embodiment of the disclosure, the partial area may be referred to as a mask. However, the disclosure is not limited thereto, and as such, according to another embodiment, the information of the partial area may include other information to identify an area or a region to be inferred by the first generative model 1100 and the second generative model 1200.

In an embodiment of the disclosure, the electronic device 1000 may include a sensor and a display. The electronic device 1000 may obtain an original image by photographing an object by using the sensor. The sensor may include, but is not limited to. a Charge-Coupled Device (CCD) sensor and a Complementary Metal-Oxide-Semiconductor (CMOS) sensor. In some embodiments, the sensor may be referred to as a camera. The original image may include, but is not limited to, an RGB image. The electronic device 1000 may display the original image through the display. The electronic device 1000 may obtain a user input for a partial area of the original image through a user interface. For example, the partial area may include at least one of an internal area or an external area of the original image. The electronic device 1000 may generate an image including the information of the partial area based on a user input. The image including the information of the partial area may be referred to as a masked image. For example, the image including the information of the partial area may be obtained by adding a mask to the original image. In an embodiment of the disclosure, the electronic device 1000 may generate a mask map based on at least one of the image including the information of the partial area or the user input. In an embodiment of the disclosure, the electronic device 1000 may receive at least one of the original image, the information of the partial area, or the mask map from an external server.

The electronic device 1000 may input the image including the information of the partial area to the first generative model 1100. For example, the first generative model 1100 may include a pre-trained GAN model. For example, the first generative model 1100 may include a generator model from among pre-trained GAN models. In an embodiment of the disclosure, the electronic device 1000 may input an image pair including the masked image and the mask map to the first generative model.

The electronic device 1000 may obtain an intermediate generated image including first image information about the partial area from the first generative model 1100. The intermediate generated image may include color information of at least one pixel corresponding to the partial area. For example, the intermediate generated image may include color information of pixels corresponding to the entire area, together with color information of at least one pixel corresponding to the partial area. However, the disclosure is not limited thereto, and the intermediate generated image may include color information of at least one pixel corresponding to the partial area and may not include color information of pixels other than the partial area.

The electronic device 1000 may input the image including the information of the partial area and the intermediate generated image to the second generative model 1200. The second generative model 1200 may include an Al model for reconstructing an image from noise. For example, the second generative model 1200 may include a pre-trained diffusion model.

In an embodiment of the disclosure, the first generative model 1100 may include fewer layers and/or fewer weight values than the second generative model 1200. In an embodiment of the disclosure, a processing speed of the first generative model 1100 may be higher than a processing speed of the second generative model. In an embodiment of the disclosure, a memory capacity occupied by the first generative model 1100 may be less than a memory capacity occupied by the second generative model 1200.

In an embodiment of the disclosure, the intermediate generated image may be pre-processed before being input to the second generative model 1200. For example, the intermediate generated image may be converted into image embedding and/or text embedding corresponding to an image. In the disclosure, the term 'embedding' may refer to low-dimensional data converted from high-dimensional data. For example, embedding may be referred to as an embedding vector, a feature vector, a feature representation, a latent vector, or a latent representation. However, the disclosure is not limited thereto, and as such, embedding may include low-dimensional data converted from high-dimensional data in another manner.

In an embodiment of the disclosure, the electronic device 1000 may generate a concatenated image based on the image including the information of the partial area and noise information. For example, the electronic device 1000 may concatenate the image including the information of the partial area to predefined initial noise. The electronic device 1000 may input the concatenated image to the second generative model 1200. The electronic device 1000 may concatenate the image including the information of the partial area to an output of the second generative model 1200. The electronic device 1000 may input the concatenated image to the second generative model 1200. The electronic device 1000 may repeatedly perform an operation of inputting the concatenated image to the second generative model 1200. For example, the electronic device 1000 may repeatedly perform the operation of inputting the concatenated image to the second generative model 1200 according to a predefined total denoising order.

The electronic device 1000 may determine whether an operation is repeated by the predefined total denoising order. Based on the determination that the operation is repeated by the predefined total denoising order, the electronic device 1000 may obtain a final generated image from the second generative model 1200.

In an embodiment of the disclosure, the second generative model 1200 may include at least one layer. The electronic device 1000 may input the intermediate generated image or image information corresponding to the intermediate generated image (e.g., image embedding) to at least one layer of the second generative model 1200.

In an embodiment of the disclosure, the electronic device 1000 may obtain a denoising strength for the intermediate generated image. The term 'denoising strength' may refer to a value indicating how strongly noise is added to an image. For example, assuming that a denoising strength has a value between 0 and 1, noise may not be added to an image in a case in which a denoising strength is 0, and an image may change to completely random noise in a case in which a denoising strength is 1. For example, based on the denoising strength being 0, noise may not be added to an image. On the other hand, based on the denoising strength being 1, the image may be changed to include random noise. The electronic device 1000 may determine the amount of noise to be added to the intermediate generated image based on the denoising strength. The amount of noise may refer to a degree of noise to be added to the intermediate generated image. In an embodiment of the disclosure, the denoising strength may be predefined according to a user's settings or a manufacturer's settings. For example, the electronic device 1000 may obtain a user input corresponding to the denoising strength through the user interface. The electronic device 1000 may determine the denoising strength based on the user input. The electronic device 1000 may add noise to the intermediate generated image based on the denoising strength.

In an embodiment of the disclosure, at least one of a function of obtaining the denoising strength for the intermediate generated image or a function of adding noise to the intermediate generated image based on the denoising strength may be performed by the second generative model 1200. For example, the second generative model 1200 may receive the intermediate generated image. The second generative model 1200 may obtain the denoising strength from the intermediate generated image. The second generative model 1200 may add noise to the intermediate generated image based on the denoising strength. The intermediate generated image to which the noise is added may be input to the at least one layer of the second generative model 1200.

In an embodiment of the disclosure, the electronic device 1000 may measure the quality of the intermediate generated image. For example, the electronic device 1000 may obtain a confidence value based on the intermediate generated image. For example, the electronic device 1000 may obtain a predicted confidence value based on the intermediate generated image. For example, the predicted confidence value may refer to a degree to which the intermediate generated image output (or predicted or inferred) by the first generative model 1100 is reliable. The electronic device 1000 may determine the denoising strength based on the predicted confidence value. For example, the denoising strength may be pre-mapped to a plurality of threshold ranges. For example, a first denoising strength may be mapped to a first threshold range, and a second denoising strength may be mapped to a second threshold range. The electronic device 1000 may determine a threshold range corresponding to the predicted confidence value from among the plurality of threshold ranges. The electronic device 1000 may add noise to the intermediate generated image with the denoising strength mapped to the determined threshold range.

In an embodiment of the disclosure, the electronic device 1000 may determine a target denoising order corresponding to the intermediate generated image to which the noise is added from among the predefined total denoising order, based on the denoising strength. The electronic device 1000 may set a current denoising order as the target denoising order.

In an embodiment of the disclosure, the electronic device 1000 may obtain a final generated image by post-processing an image output from the second generative model 1200. For example, the electronic device 1000 may obtain a final generated image, based on image information corresponding to the partial area (e.g., an unknown area or the target area) from among the image output from the second generative model 1200 and image information corresponding to an area (e.g., a known area) excluding the partial area from among the initially input image (which may be referred to as the image including the information of the partial area).

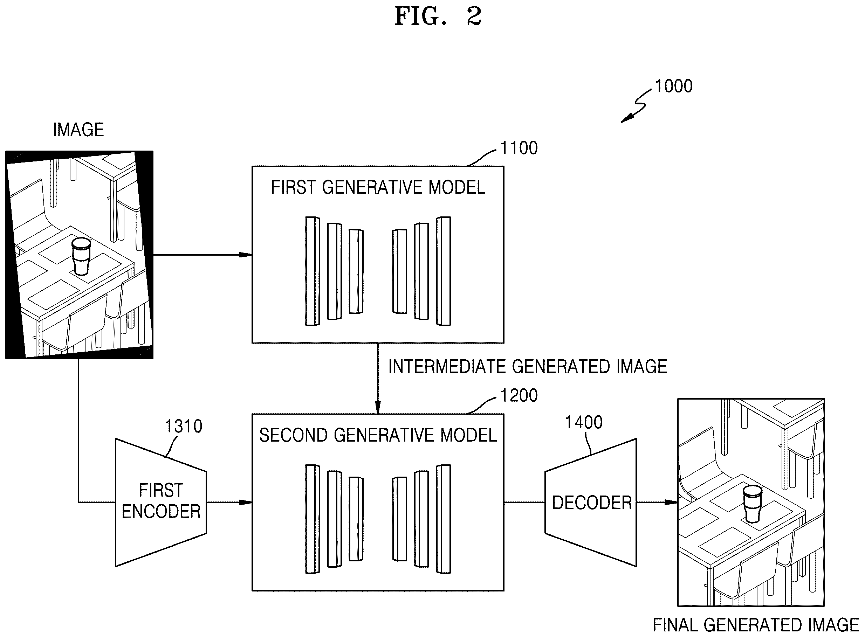

FIG. 2 is a conceptual diagram for describing an encoder and a decoder, according to an embodiment of the disclosure. The same description as that made with reference to FIG. 1 will be omitted.

Referring to FIG. 2, the electronic device 1000 may include a first encoder 1310 and a decoder 1400. The first encoder 1310 may encode an image. The decoder 1400 may output an image by decoding image embedding. In an embodiment of the disclosure, each of the first encoder 1310 and the decoder 1400 may be a pre-trained Al model.

In an embodiment of the disclosure, each of the first encoder 1310 and the decoder 1400 may be implemented as a variational autoencoder (VAE) model or a vector quantized generative adversarial network (VQGAN). For example, the first encoder 1310 may be an encoder portion of a VAE model or a VQGAN. For example, the decoder 1400 may be a decoder portion of a VAE model or a VQGAN. The first encoder 1310 and the decoder 1400 may be trained by using a training method of a VAE model or a VQGAN. For example, an output of the first encoder 1310 may be input to the decoder 1400. For example, the first encoder 1310 and the decoder 1400 may be trained together by comparing an input of the first encoder 1310 with an output of the decoder 1400. However, the disclosure is not limited thereto, and as such, according to another embodiment, the first encoder 1310 and/or the decoder 1400 may be implemented in another manner.

In an embodiment of the disclosure, the first encoder 1310 may output a latent vector corresponding to an input image. For example, the term 'latent vector' may refer to a probability value based on a Gaussian probability distribution expressed by a mean and a variance. The first encoder 1310 may transmit the latent vector to the second generative model.

In an embodiment of the disclosure, the second generative model 1200 may output the latent vector (hereinafter, also referred to as final noise). The decoder 1400 may output a final generated image by decoding the latent vector that is an output of the second generative model 1200.

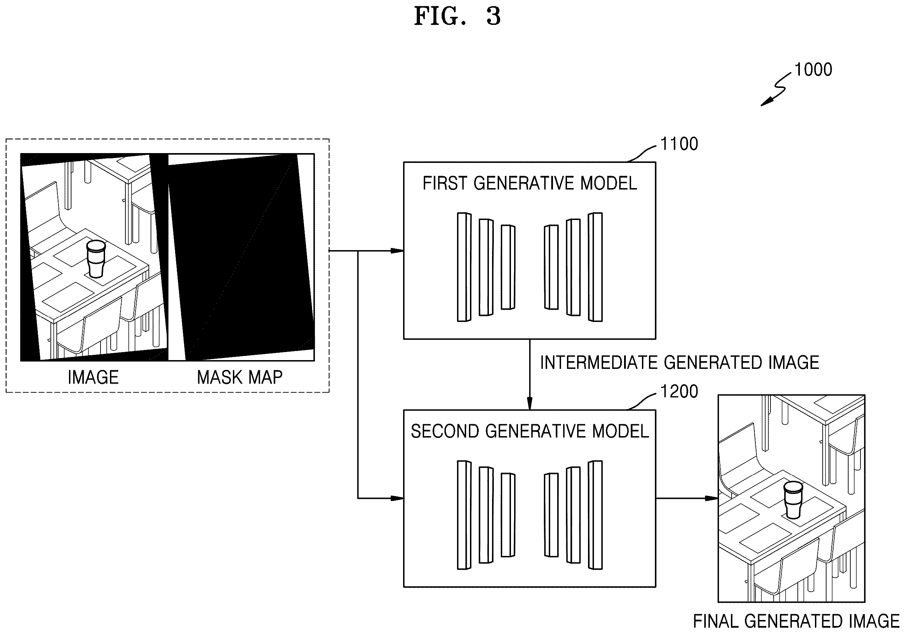

FIG. 3 is a conceptual diagram for describing a mask map, according to an embodiment of the disclosure. The same description as that made with reference to FIGS. 1 and 2 will be omitted.

Referring to FIG. 3, the electronic device 1000 may obtain a mask map including location information of a partial area of an image (e.g., an unknown area or a target area to be inferred). For example, the electronic device 1000 may obtain a mask map corresponding to an image from an external server. For example, the electronic device 1000 may generate a mask map based on an image. For example, the electronic device 1000 may generate a mask map in which a partial area (e.g., an unknown area or a target area) is expressed as a first value (e.g., a white area in FIG. 3) and an area (e.g., a preservation area) excluding the partial area is expressed as a second value (e.g., a black area in FIG. 3). For example, the mask map may be a binary image including the first value or the second value. However, the disclosure is not limited thereto, and as such, the mask map may be defined using another format.

The electronic device 1000 may concatenate the image to the mask map. For example, the image expressed as a three-channel image with each of an R value, a G value, and a B value of RGV values as one channel. For example, the mask map may be expressed as a 1-channel image. The image to which the mask map is concatenated may include a total of 4 channels. However, the disclosure is not limited thereto, and the number of channels of the image or the number of channels of the mask map is not limited thereto. In the disclosure, the term 'channel' may refer to one dimension of three-dimensional input data.

The electronic device 1000 may transmit the concatenated image to the first generative model 1100. The electronic device 1000 may transmit the concatenated image to the second generative model 1200.

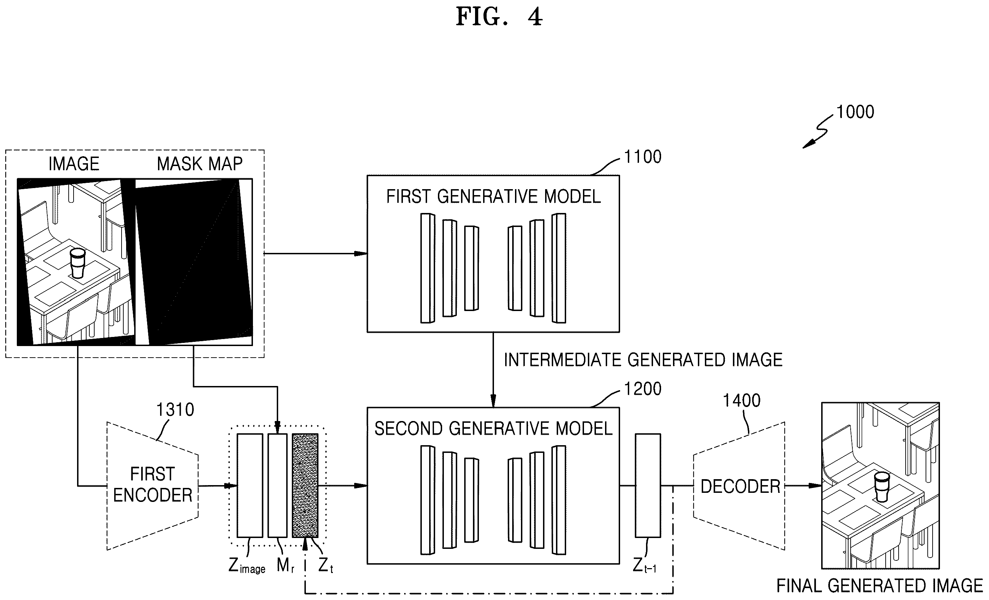

FIG. 4 is a conceptual diagram for describing an operation of a second generative model, according to an embodiment of the disclosure. The same description as that made with reference to FIGS. 1 to 3 will be omitted.

Referring to FIG. 4, the electronic device 1000 may transmit an image to the first encoder 1310. The first encoder 1310 may encode the image. The electronic device 1000 may obtain an encoded image Z_{image} (e.g., a latent vector).

The electronic device 1000 may adjust a mask map. For example, the electronic device 1000 may adjust the mask map to a specific size. The specific size may be a predefined size. For example, the predefined size may be the same as the encoded image Z_{image}. The number of channels (e.g., 3) of the encoded image Z_{image} may be different from the number of channels (e.g., 1) of the adjusted mask map Mᵣ.

The electronic device 1000 may obtain current noise information Zt. The number of channels and size of the current noise information Zt may be the same as the number of channels and size of the encoded image Z_{image}. However, the disclosure is not limited thereto, and the number of channels and size of the current noise information Zt may be different from the number of channels and size of the encoded image Z_{image}. Here, t is defined as a current denoising order of the second generative model 1200. In the disclosure, the term 'current denoising order' may refer to the number of times an input and an output of the second generative model 1200 are repeated. For example, t may be expressed as an integer that a total denoising order (e.g., T) to 0. For example, ZT may denote initial noise information first input to the second generative model 1200. The initial noise information may include random values. For example, the initial noise information may include, but is not limited to, Gaussian noise following a Gaussian distribution.

The electronic device 1000 may concatenate the encoded image Z_{image}, the adjusted mask map Mᵣ, and the current noise information Zt. The electronic device 1000 may transmit data (hereinafter, referred to as input data) in which the encoded image Z_{image}, the adjusted mask map Mᵣ, and the current noise information Zt are concatenated to the second generative model 1200. The second generative model 1200 may perform a denoising operation based on the input data. In the disclosure, the term 'denoising operation' may refer to an operation of removing certain noise from input noise. The second generative model 1200 may generate next noise information Zₜ₋₁ by performing the denoising operation.

The electronic device 1000 may determine whether the denoising operation has been performed as many times as the total denoising order. For example, the electronic device 1000 may determine whether the next noise information Zₜ₋₁ is final noise information Z₀. In an example case in which it is determined that the denoising operation has been performed as many times as the total denoising order, the electronic device 1000 may transmit the final noise information Z₀ to the decoder 1400. The decoder 1400 may generate a final generated image based on the final noise information Z₀. In an example case in which it is determined that the denoising operation has not been performed as many times as the total denoising order, the electronic device 1000 may concatenate the encoded image Z_{image}, the adjusted mask map Mᵣ, and the next noise information Zₜ₋₁. The electronic device 1000 may repeatedly perform the denoising operation by inputting the encoded image Z_{image}, the adjusted mask map Mᵣ, and the next noise information Zₜ₋₁, which are concatenated to each other, to the second generative model 1200.

In an embodiment of the disclosure, the first encoder 1310 and the decoder 1400 may be omitted from the electronic device 1000. In this case, the electronic device 1000 may concatenate the image, the mask map, and the current noise information Zt. The electronic device 1000 may repeatedly perform the denoising operation by inputting the image, the mask map, and the current noise information Zt, which are concatenated, to the second generative model 1200. The second generative model 1200 may output the final noise information Z₀. The final noise information Z₀ may include a final generated image. For example, one or more processors of the electronic device 1000 may repeatedly perform the denoising operation by inputting the image, the mask map, and the current noise information Zt, which are concatenated, to the second generative model 1200. The second generative model 1200 may output the final noise information Z₀. The final noise information Z₀ may include a final generated image.

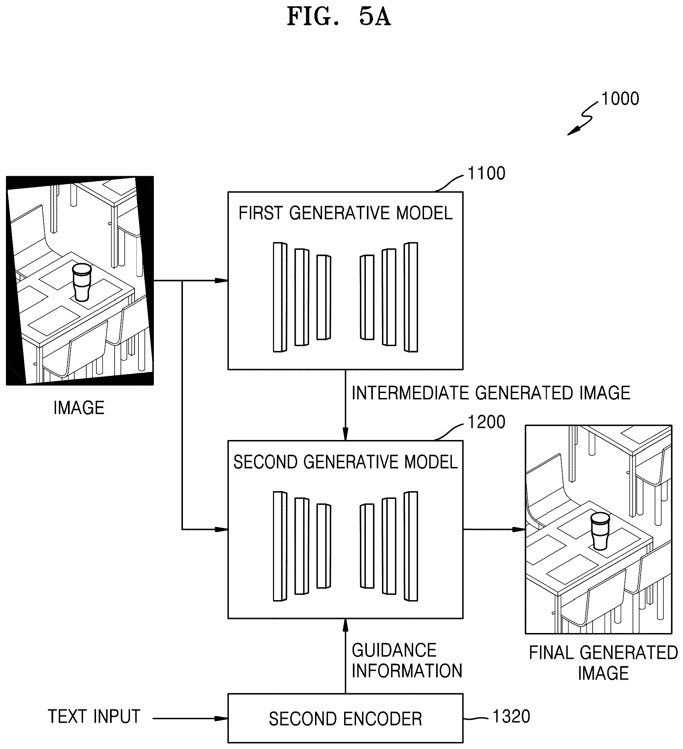

FIG. 5A is a conceptual diagram for describing text guidance input to a second generative model, according to an embodiment of the disclosure. The same description as that made with reference to FIGS. 1 to 4 will be omitted.

Referring to FIG. 5A, the electronic device 1000 may include a second encoder 1320. The electronic device 1000 may obtain a text input. The text input may be text corresponding to an image and/or a final generated image. For example, the text input may be expressed in a sentence such as "A table with a tumbler on it in a cafeteria." Although the text input is described as an English sentence, the disclosure is not limited thereto and the text input may be expressed in any language.

In an embodiment of the disclosure, the electronic device 1000 may obtain the text input from an external server. In an embodiment of the disclosure, the electronic device 1000 may obtain the text input from a user through a user interface. In an embodiment of the disclosure, the electronic device 1000 may include a sound-to-text converter . The sound-to-text converter may include a speech-to-text converter. The electronic device 1000 may obtain a user voice input from the user through the user interface. The electronic device 1000 may convert the user voice input into a text input by using the sound-to-text converter. In an embodiment of the disclosure, the electronic device 1000 may include an image-to-text converter. The electronic device 1000 may input an image into the image-to-text converter and obtain a text input representing the image.

The second encoder 1320 may encode the text input. In an embodiment of the disclosure, the second encoder 1320 may be an artificial intelligence (AI) model that is pre-trained to encode a text input. The second encoder 1320 may transmit the encoded text input to the second generative model 1200. The encoded text input may also be referred to as text guidance, text embedding, or guidance information. The electronic device 1000 may transmit the encoded text input to at least one layer of the second generative model 1200. The second generative model 1200 may output a final generated image based on the image, an intermediate generated image, and the encoded text input.

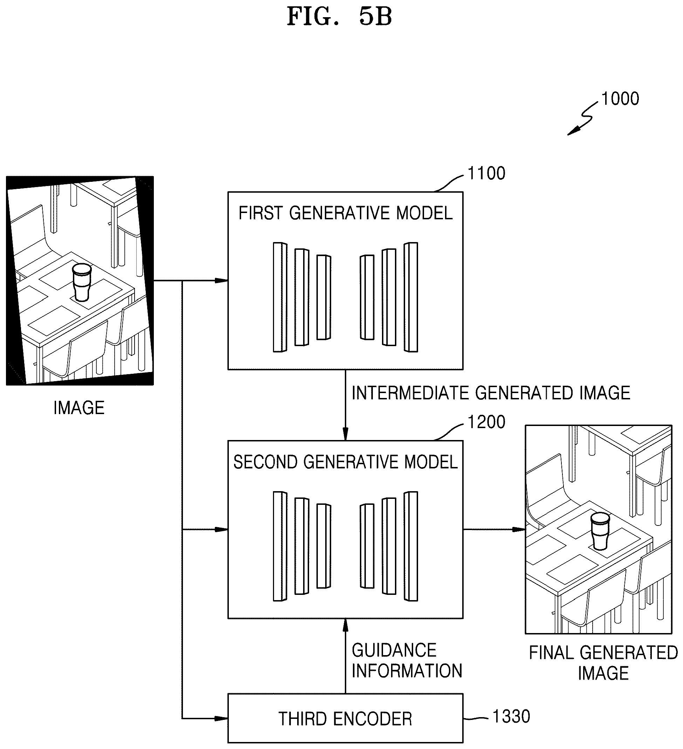

FIG. 5B is a conceptual diagram for describing image guidance input to a second generative model, according to an embodiment of the disclosure. The same description as that made with reference to FIGS. 1 to 5A will be omitted.

Referring to FIG. 5B, the electronic device 1000 may include a third encoder 1330. The electronic device 1000 may transmit an image to the third encoder 1330. The third encoder 1330 may encode the image. In an embodiment of the disclosure, the third encoder 1330 may be an Al model that is pre-trained to encode an image. The third encoder 1330 may transmit the encoded image to the second generative model 1200. The encoded image may also be referred to as image guidance, image embedding, or guidance information. The electronic device 1000 may transmit the encoded image to at least one layer of the second generative model 1200. The second generative model 1200 may output a final generated image based on the image, an intermediate generated image, and the encoded image.

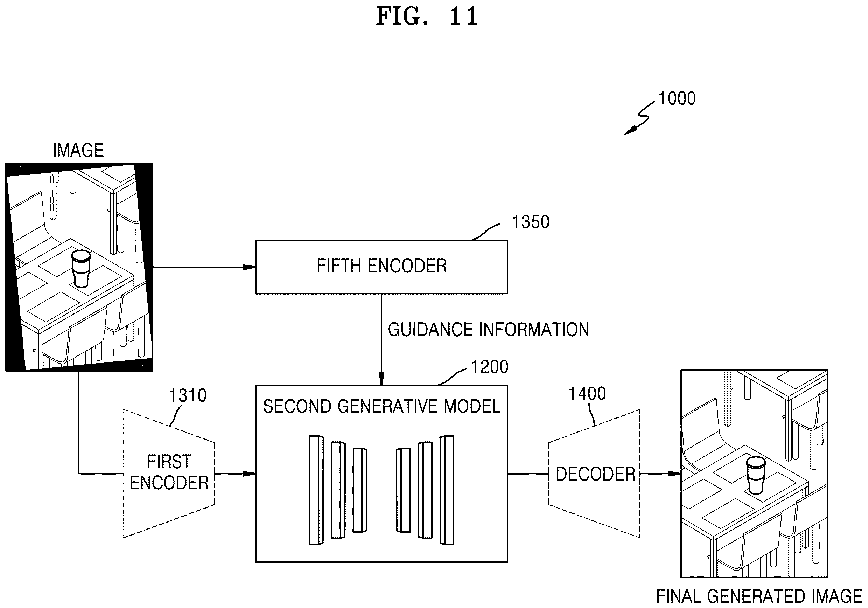

In an embodiment of the disclosure, the third encoder 1330 may be pre-trained in the same manner as a fifth encoder 1350 of FIGS. 11, 12A, 12B, 13A and 13B described below.

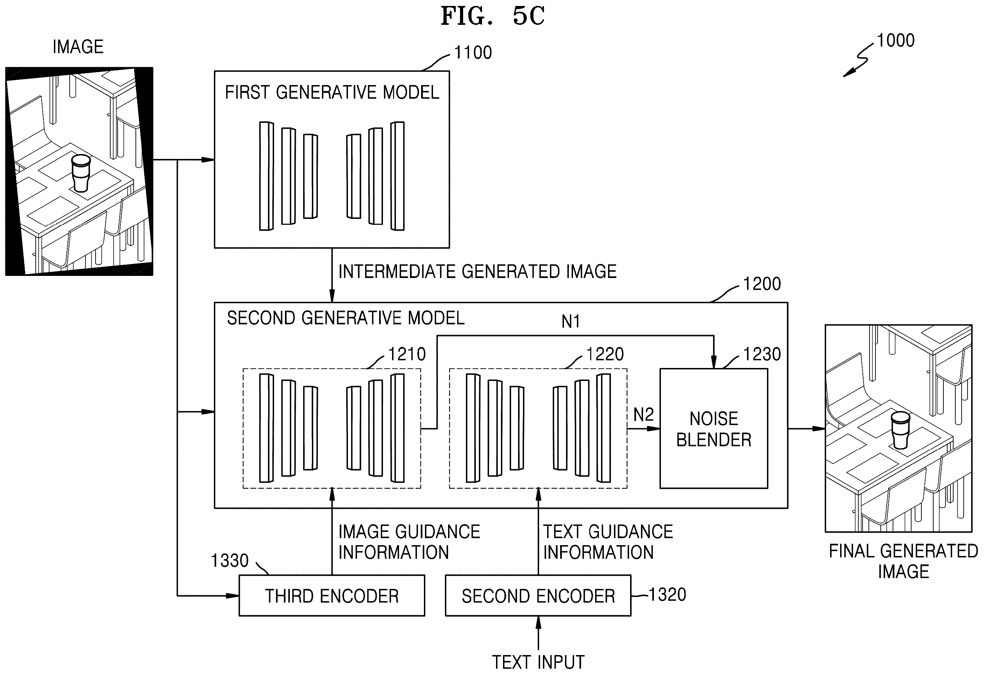

FIG. 5C is a conceptual diagram for describing text guidance and image guidance input to a second generative model, according to an embodiment of the disclosure. The same description as that made with reference to FIGS. 1 to 5B will be omitted.

Referring to FIG. 5C, the electronic device 1000 may include the second encoder 1320 and the third encoder 1330. A function and an operation of the second encoder 1320 may correspond to a function and an operation of the second encoder 1320 of FIG. 5A, and thus, a repeated description thereof will be omitted. A function and an operation of the third encoder 1330 correspond to a function and an operation of the third encoder 1330 of FIG. 5B, and thus, a repeated description thereof will be omitted. The second encoder 1320 may output text guidance information based on a text input. The third encoder 1330 may output image guidance information based on an image.

The second generative model 1200 may include a first neural network 1210, a second neural network 1220, and a noise blender 1230. The first neural network 1210 may output first noise (N1) based on the image, an intermediate generated image, and the image guidance information. The second neural network 1220 may output second noise (N2) based on the image, the intermediate generated image, and the text guidance information. The noise blender 1230 may blend the first noise with the second noise. The noise blender 1230 may output blended noise by doing a weighted sum on the first noise and the second noise. The second generative model 1200 may output a final generated image based on the blended noise.

In an embodiment of the disclosure, a weight value between the first noise and the second noise may vary according to a user's settings or a manufacturer's settings. For example, the electronic device 1000 may obtain a weight value from the user through a user interface.

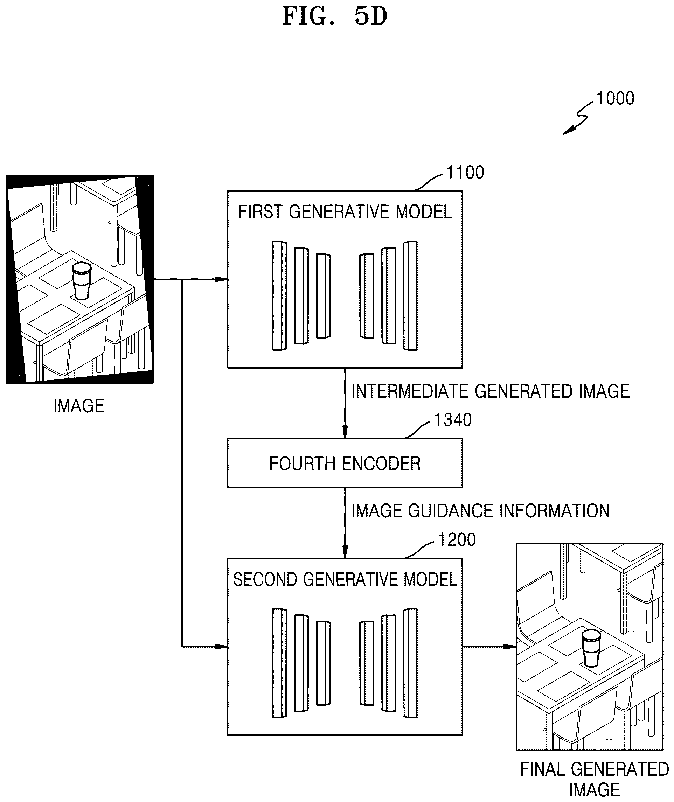

FIG. 5D is a conceptual diagram for describing an embodiment in which an output of a first generative model is used as image guidance, according to an embodiment of the disclosure. The same description as that made with reference to FIGS. 1 to 5C will be omitted.

Referring to FIG. 5D, the electronic device 1000 may include a fourth encoder 1340. The electronic device 1000 may transmit an intermediate generated image to the fourth encoder 1340. The fourth encoder 1340 may encode the intermediate generated image. In an embodiment of the disclosure, the fourth encoder 1340 may be an Al model that is pre-trained to encode an image. In an embodiment of the disclosure, a configuration, an operation, and a function of the fourth encoder 1340 may correspond to a configuration, an operation, and a function of the third encoder 1330.

The fourth encoder 1340 may transmit the encoded intermediate generated image to the second generative model 1200. The encoded intermediate generated image may also be referred to as image guidance, image embedding, or guidance information. The electronic device 1000 may transmit the encoded intermediate generated image to at least one layer of the second generative model 1200. The second generative model 1200 may output a final generated image based on the image and the encoded intermediate generated image.

According to an embodiment of the disclosure, a second generative model that outputs an appropriate image suitable for image context may be provided by using an output of a first generative model, which has the property of relatively referencing image information of a known area, as guidance information for the second generative model.

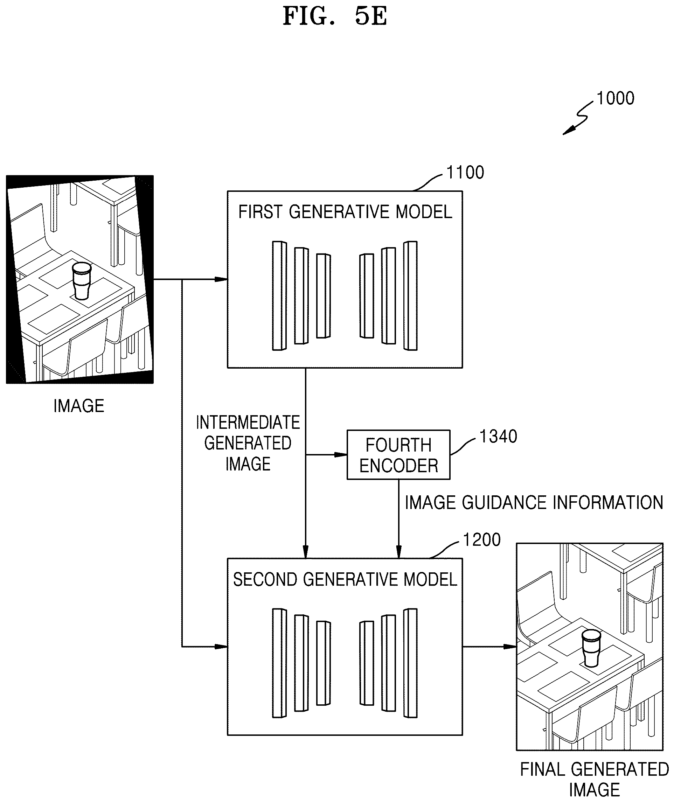

FIG. 5E is a conceptual diagram for describing an embodiment in which an output of a first generative model is used as image guidance, according to an embodiment of the disclosure. The same description as that made with reference to FIGS. 1 to 5C will be omitted.

Referring to FIG. 5E, the electronic device 1000 may include the fourth encoder 1340. A function and an operation of the fourth encoder 1340 correspond to a function and an operation of the fourth encoder 1340 of FIG. 5D, and thus, a repeated description thereof will be omitted. The fourth encoder 1340 may output image guidance information based on an intermediate generated image.

In an embodiment of the disclosure, the electronic device 1000 may transmit an intermediate generated image, which is an output of the first generative model 1100, to the second generative model 1200. The second generative model 1200 may infer a final generated image based on the intermediate generated image and the image guidance information. An embodiment in which the second generative model 1200 infers the final generated image based on the intermediate generated image is the same as that described with reference to FIGS. 1 to 5C, and thus, a repeated description thereof will be omitted. An embodiment in which the second generative model 1200 infers the final generated image based on the image guidance information is the same as that described with reference to FIG. 5D, and thus, a repeated description thereof will be omitted.

In an embodiment of the disclosure, unlike in FIG. 5E, the second generative model 1200 may receive an encoded text input. For example, the electronic device 1000 may receive a text input and may encode the text input by using an encoder such as the second encoder 1320 of FIG. 5A. The second generative model 1200 may output a final generated image by using the encoded text input (text guidance), an image, the intermediate generated image, and an encoded intermediate generated image (image guidance) as an input.

According to an embodiment of the disclosure, because the second generative model 1200 infers a final generated image not only by referring to image guidance but also based on an intermediate generated image, inpainting and/or outpointing performance may be improved.

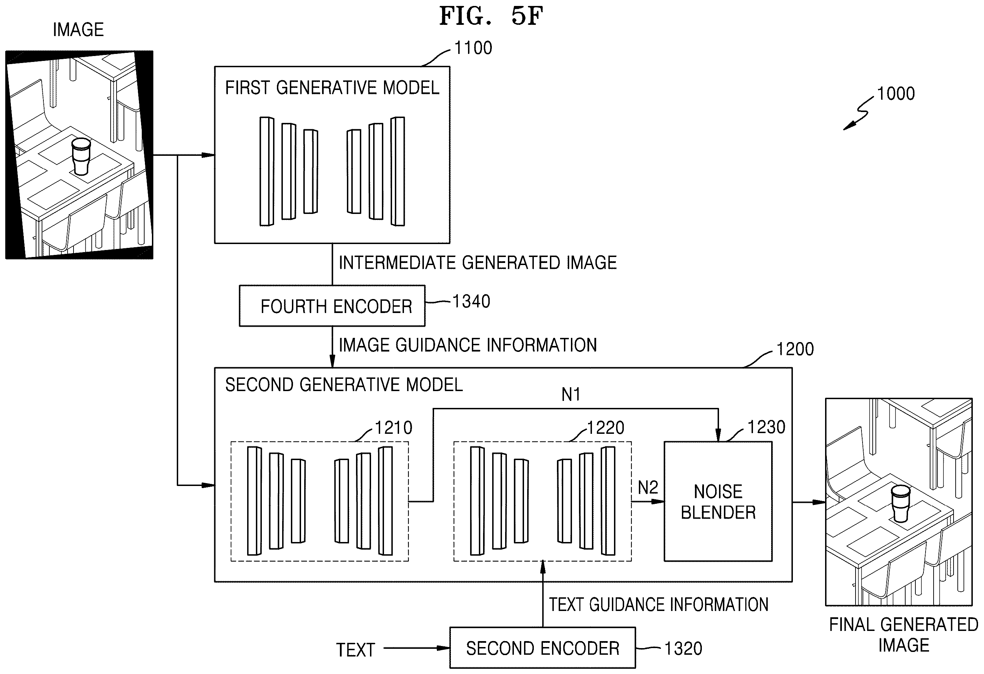

FIG. 5F is a conceptual diagram for describing an embodiment in which an output of a first generative model is used as image guidance, together with text guidance, according to an embodiment of the disclosure. The same description as that made with reference to FIGS. 1 to 5D will be omitted.

Referring to FIG. 5F, the electronic device 1000 may include the second encoder 1320 and the fourth encoder 1340. A function and an operation of the second encoder 1320 correspond to a function and an operation of the second encoder 1320 of FIG. 5C, and thus, a repeated description thereof will be omitted. A function and an operation of the fourth encoder 1340 correspond to a function and an operation of the fourth encoder 1340 of FIG. 5D, and thus, a repeated description thereof will be omitted. The second encoder 1320 may output text guidance information based on a text input. The fourth encoder 1340 may output image guidance information based on an intermediate generated image.

The second generative model 1200 may include the first neural network 1210, the second neural network 1220, and the noise blender 1230. Configurations, functions, and operations of the first neural network 1210, the second neural network 1220, and the noise blender 1230 correspond to configurations, functions, and operations of the first neural network 1210, the second neural network 1220, and the noise blender 1230 of FIG. 5C, and thus, a repeated description thereof will be omitted. The electronic device 1000 may transmit the image guidance information from the fourth encoder 1340 to the first neural network 1210. The electronic device 1000 may transmit the text guidance information from the second encoder 1320 to the second neural network 1220.

According to an embodiment of the disclosure, because a final generated image is inferred by referring to not only image guidance but also text guidance, inpainting and/or outpainting performance may be improved.

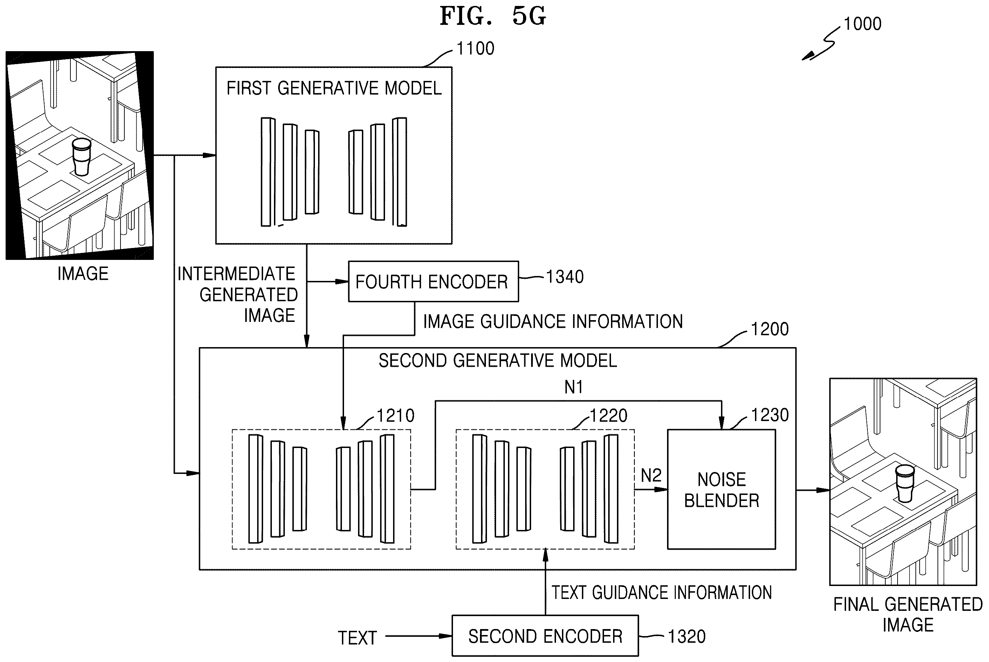

FIG. 5G is a conceptual diagram for describing an embodiment in which an output of a first generative model is used as image guidance, together with text guidance, according to an embodiment of the disclosure.

Referring to FIG. 5G, the electronic device 1000 may include the second encoder 1320 and the fourth encoder 1340. Functions and operations of the second encoder 1320 and the fourth encoder 1340 correspond to functions and operations of the second encoder 1320 and the fourth encoder 1340 of FIG. 5F, and thus, a repeated description thereof will be omitted. The second encoder 1320 may output text guidance information based on a text input. The fourth encoder 1340 may output image guidance information based on an intermediate generated image.

The second generative model 1200 may include the first neural network 1210, the second neural network 1220, and the noise blender 1230. Configurations, functions, and operations of the first neural network 1210, the second neural network 1220, and the noise blender 1230 correspond to configurations, functions, and operations of the first neural network 1210, the second neural network 1220, and the third neural network 1230 of FIGS. 5C and 5F, and thus, a repeated description thereof will be omitted. The electronic device 1000 may transmit the image guidance information from the fourth encoder 1340 to the first neural network 1210. The electronic device 1000 may transmit the text guidance information from the second encoder 1320 to the second neural network 1220.

In an embodiment of the disclosure, the electronic device 1000 may transmit the intermediate generated image, which is an output of the first generative model 1100, to the second generative model 1200. The second generative model 1200 may infer a final generated image based on the intermediate generated image, the image guidance information, and the text guidance information. An embodiment in which the second generative model 1200 infers the final generated image based on the intermediate generated image is the same as that described with reference to FIGS. 1 to 5C and 5E, and thus, a repeated description thereof will be omitted. An embodiment in which the second generative model 1200 infers the final generated image based on the image guidance information and the text guidance information is the same as that described with reference to FIGS. 5C and 5F, and thus, a repeated description thereof will be omitted.

According to an embodiment of the disclosure, because the second generative model 1200 infers a final generated image by not only referring to image guidance and/or text guidance but also based on an intermediate generated image, inpainting and outpainting performance may be improved.

Although an image is input to the first generative model 1100 and the second generative model 1200 in FIGS. 5A to 5G, unlike this, a mask map may be concatenated to an image and may be input to the first generative model 1100 and the second generative model 1200.

Although the first encoder 1310 and the decoder 1400 of FIGS. 2 and 4 are omitted in FIGS. 5A to 5G, unlike this, an image and/or a mask map, which is an input of the second generative model 1200, may be encoded by the first encoder 1310, and a final output of the second generative model 1200 may be decoded by the decoder 1400.

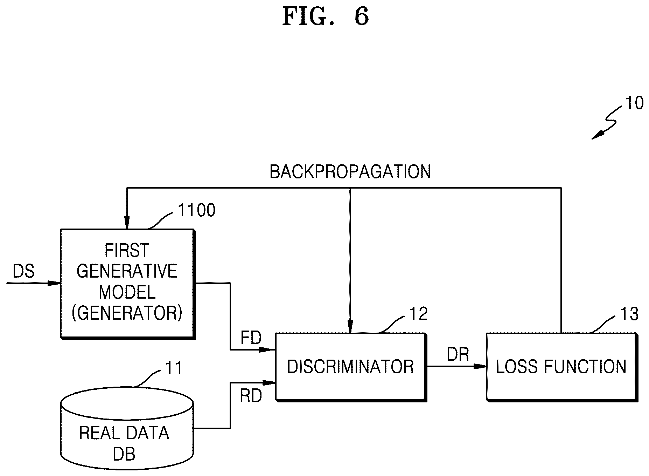

FIG. 6 is a conceptual diagram for describing a method of training a first generative model, according to an embodiment of the disclosure. The same description as that made with reference to FIGS. 1 to 5G will be omitted.

Referring to FIG. 6, a model training system 10 may include a first generative model 1100, a discriminator 12, and a loss function 13. For example, the model training system 10 may be a system for training a generative adversarial network (GAN) model. In some embodiments as illustrated in FIG. 6, the first generative model 1100 may be referred to as generator 1100. In the disclosure, the term 'GAN model' may refer to a model in which the generator 1100 and the discriminator 12 compete in an adversarial manner by improving each other's performance through training. Each of the generator 1100 and the discriminator 12 may include at least one layer. The layer may include a filter having weight values for extracting a feature from input data.

The generator 1100 may be trained to output fake data FD by using a data set DS as an input. The data set DS may be a set of data including a plurality of images. The data set DS may include a mask map for each of the plurality of images. The fake data FD may indicate fake image data. A real data DB 11 may include a set of real data RD.

The discriminator 12 may be trained to determine whether the fake data FD or the real data RD is fake by using the fake data FD or the real data RD as an input.

The loss function 13 may calculate a loss function value based on a discrimination result DR. The loss function value may be transmitted to the discriminator 12 and the generator 1100 through backpropagation. A weight value of the at least one layer included in the discriminator 12 and the generator 1100 may be updated based on the loss function value.

In an embodiment of the disclosure, at least some of functions of the model training system 10 may be performed by the electronic device 1000 described with reference to FIGS. 1 to 5G, but the disclosure is not limited thereto and may be performed by an external server device rather than the electronic device 1100.

In an embodiment of the disclosure, the generator 1100 trained through the model training system 10 may correspond to the first generative model 1100 described with reference to FIGS. 1 to 5G.

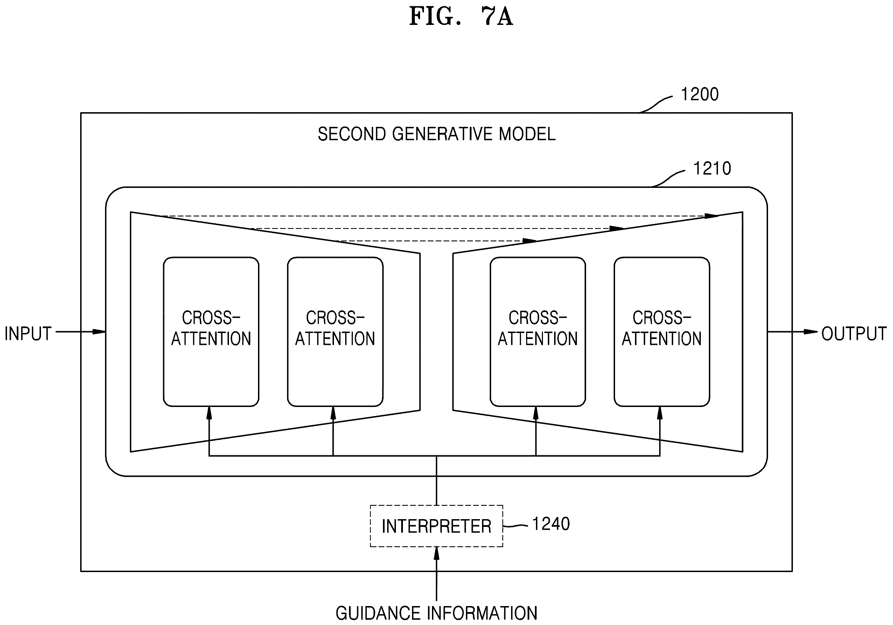

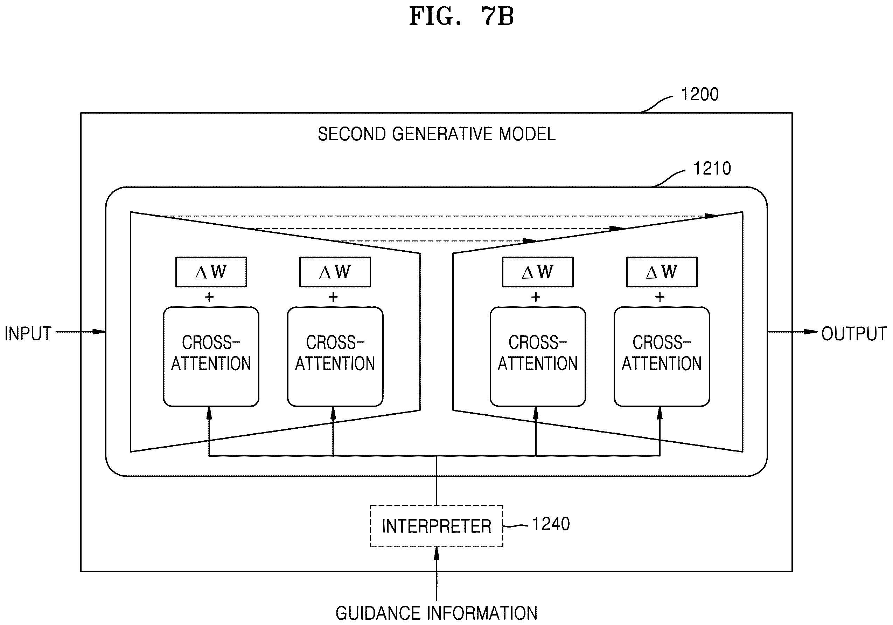

FIGS. 7A and 7B are conceptual diagrams for describing a configuration of a second generative model, according to an embodiment of the disclosure. The same description as that made with reference to FIGS. 1 to 6 will be omitted.

Referring to FIG. 7A, the second generative model 1200 may include the first neural network 1210. The first neural network 1210 may include at least one layer. For example, the at least one layer may perform cross-attention. However, the disclosure is not limited thereto, and the at least one layer may include a self-attention layer or a residual block. A layer that performs cross-attention from among the at least one layer may be referred to as a cross-attention layer.

The electronic device 1000 may transmit guidance information to the cross-attention layer of the first neural network 1210. The first neural network 1210 may reflect a weight value in the guidance information based on a correlation between an input image and the guidance information.

In an embodiment of the disclosure, the first neural network 1210 may perform a cross-attention operation using a query, a key, and a value as operands. For example, the query may include current noise information, and the key and the value may include guidance information. However, the disclosure is not limited thereto, and as such, the query, the key and the value may include other information. The cross-attention operation may be performed in the cross-attention layer. The first neural network 1210 may transmit a cross-attention operation result to a next layer.

In an embodiment of the disclosure, unlike in FIG. 7A, the first neural network 1210 may include a self-attention layer. A query, a key, and a value may include current noise information. The first neural network 1210 may perform a self-attention operation using the query, the key, and the value as operands. The self-attention operation may be performed in a self-attention layer. The first neural network 1210 may transmit a self-attention operation result to a next layer.

In an embodiment of the disclosure, the second generative model 1200 may include an interpreter 1240. For example, the second generative model 1200 may be a model pre-trained by inputting text guidance information obtained from text to a cross-attention layer. The interpreter 1240 may convert guidance information to have the property and/or form of text guidance information so that the performance of the second generative model 1200 is maintained even when guidance information obtained from an arbitrary data type other than text is input to the cross-attention layer. For example, the interpreter 1240 may convert image guidance information to have the property and/or form of text guidance information.

In an embodiment of the disclosure, the interpreter 1240 may convert image guidance information output from the third encoder 1330 and the fourth encoder 1340 of FIGS. 5B to 5G to have the property and/or form of text guidance information.

According to an embodiment of the disclosure, various data may be used as guidance by adding only an interpreter configuration without newly training or fine-tuning a second generative model having high training cost.

In an embodiment of the disclosure, the interpreter 1240 may be omitted. In this case, the second generative model 1200 may be pre-trained through a process in which arbitrary guidance information (e.g., image guidance information) is input to a cross-attention layer.

Referring to FIG. 7B, task performance may be improved by fine-tuning the first neural network 1210 that is pre-trained. In an embodiment of the disclosure, in a state where all parameters (e.g., weight value) of the first neural network 1210 that is pre-trained are fixed, the electronic device 1000 may calculate a weight change amount ΔW of at least one of predefined layers according to an additional training data input.

The electronic device 1000 may determine a new weight value by adding the weight change amount ΔW to the fixed weight value of at least one of the predefined layers corresponding to the fixed parameters. According to an embodiment of the disclosure, task performance corresponding to an additional training data input may be improved by fine-tuning the first neural network 1210.

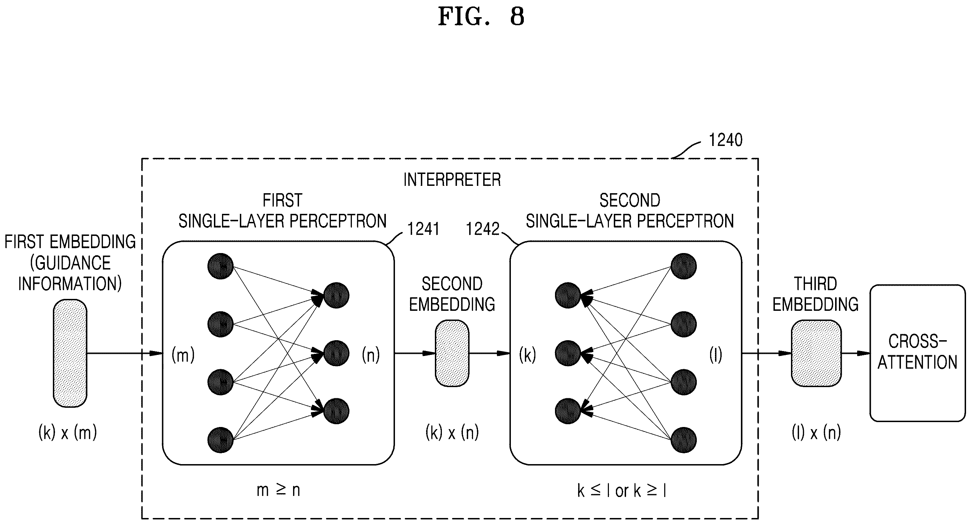

FIG. 8 is a conceptual diagram for describing a configuration of an interpreter, according to an embodiment of the disclosure. The same description as that made with reference to FIGS. 1 to 7B will be omitted.

Referring to FIG. 8, the interpreter 1240 may include at least one single-layer perceptron. In an embodiment of the disclosure, the interpreter 1240 may include a first single-layer perceptron 1241 and a second single-layer perceptron 1242. The interpreter 1240 may include a multi-layer perceptron including the first single-layer perceptron 1241 and the second single-layer perceptron 1242. In an embodiment of the disclosure, the first single-layer perceptron 1241 and the second single-layer perceptron 1242 may be connected to each other and pre-trained.

The first single-layer perceptron 1241 may output second embedding by using first embedding as an input. The first embedding may be referred to as guidance information or target image embedding. The second embedding may be referred to as intermediate image embedding. For example, the first embedding may be a matrix having a size of k x m (k and m are natural numbers). The first single-layer perceptron 1241 may include a first layer and a second layer. The first layer may include m nodes. The second layer may include n nodes (n is a natural number). In an embodiment of the disclosure, m may be a natural number that is greater than or equal to n. However, the disclosure is not limited thereto, and m may be less than or equal to n. For example, the second embedding may be a matrix having a size of k x n.

The second single-layer perceptron 1242 may output third embedding by using the second embedding as an input. The third embedding may be referred to as resulting image embedding. The second single-layer perceptron 1242 may include a third layer and a fourth layer. The third layer may include k nodes. The fourth layer may include I nodes (I is a natural number). In an embodiment of the disclosure, k may be less than or equal to l. However, the disclosure is not limited thereto, and k may be greater than or equal to l. For example, the third embedding may be a matrix having a size of l x n. The third embedding may be input to at least one layer such as a cross-attention layer of the second generative model 1200 of FIGS. 7A and 7B (or the first neural network 1210 of FIGS. 7A and 7B).

According to an embodiment of the disclosure, the interpreter 1240 may include two or more single-layer perceptrons. Although only two single-layer perceptrons (the first single-layer perceptron 1241 and the second single-layer perceptron 1242) are shown in FIG. 8, the disclosure is not limited thereto, and the interpreter 1240 may include three or more single-layer perceptrons, and a next single-layer perceptron may output next embedding by using embedding output from a previous single-layer perceptron as an input. In this case, embedding output from a last single-layer perceptron may be referred to as resulting image embedding. The resulting image embedding may be input to at least one layer such as the cross-attention layer of the second generative model 1200 of FIGS. 7A and 7B (or the first neural network 1210 of FIGS. 7A and 7B).

According to an embodiment of the disclosure, unlike in FIG. 8, the interpreter 1240 may include only a unique single-layer perceptron. In this case, embedding output from the unique single-layer perceptron may be referred to as resulting image embedding. The resulting image embedding may be input to at least one layer such as the cross-attention layer of the second generative model 1200 of FIGS. 7A and 7B (or the first neural network 1210 of FIGS. 7A and 7B).

According to an embodiment of the disclosure, the interpreter 1240 may perform a function of converting the dimension of image guidance into the dimension of text guidance. According to an embodiment of the disclosure, the interpreter 1240 may perform a function of interpreting or converting a property difference between image guidance and text guidance. According to an embodiment of the disclosure, as the interpreter 1240 performs the above functions, a second generative model pre-trained to understand only text guidance may understand various guidance information such as image guidance.

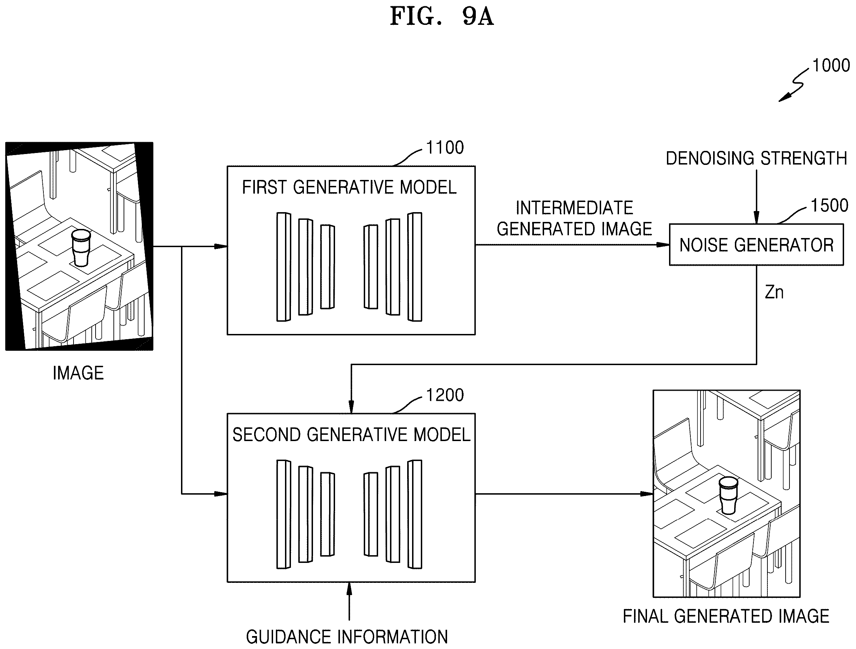

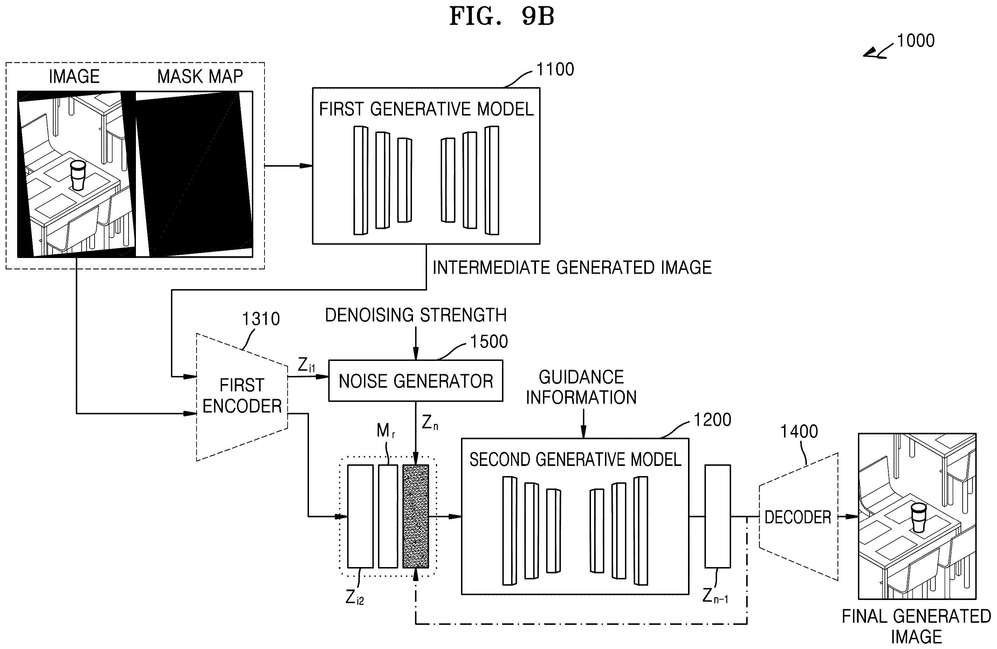

FIGS. 9A and 9B are conceptual diagrams for describing an embodiment of adding noise to an intermediate generated image, according to an embodiment of the disclosure. The same description as that made with reference to FIGS. 1 to 8 will be omitted.

Referring to FIG. 9A, the electronic device 1000 may obtain a denoising strength. The denoising strength may correspond to the amount of noise to be added to an intermediate generated image. In an embodiment of the disclosure, the denoising strength may be a specific value. For example, the specific value may be pre-set according to a user's settings or a manufacturer's settings. For example, the denoising strength may be determined in consideration of a performance index of a first generative model.

In an embodiment of the disclosure, the electronic device 1000 may include a noise generator 1500. The noise generator 1500 may add noise to an intermediate generated image based on the denoising strength. The electronic device 1000 may identify a denoising order mapped to the denoising strength. The electronic device 1000 may set a denoising order of current noise information of the second generative model 1200 as the identified denoising order. An intermediate generated image Zₙ to which noise is added may be used as current noise information having the identified denoising order (e.g., n) of the second generative model. The second generative model 1200 may obtain next noise information Zₙ₋₁ based on an image (e.g., a masked image), the intermediate generated image Zₙ to which noise is added, and guidance information as an input.

Referring to FIG. 9B, the electronic device 1000 may encode an image by using the first encoder 1310. The first encoder 1310 may output an encoded image Zᵢ₂. The electronic device 1000 may adjust a mask map to a predefined size. The electronic device 1000 may encode an intermediate generated image by using the first encoder 1310. The first encoder 1310 may output an encoded intermediate generate image Zᵢ₁. The noise generator 1500 may add noise to the encoded intermediate generated image Zᵢ₁ based on a denoising strength. The electronic device 1000 may determine a denoising order n corresponding to the denoising strength. The noise generator 1500 may set an intermediate generated image Zₙ to which noise is added as current noise information.

The electronic device 1000 may concatenate the encoded image Zᵢ₂, the adjusted mask map Mᵣ, and the intermediate generated image Zₙ to which noise is added. An order of concatenating the encoded image Zᵢ₂, the adjusted mask map Mᵣ, and the intermediate generated image Zₙ to which noise is added may be arbitrarily determined, but an order determined when the second generative model 1200 is trained and an order during denoising (or inference) may be the same. The electronic device 1000 may input data (hereinafter, input data) obtained by concatenating the encoded image Zᵢ₂, the adjusted mask map Mᵣ, and the intermediate generated image Zₙ to which noise is added to the second generative model 1200. The second generative model 1200 may output next noise information Zₙ₋₁ based on the input data. The electronic device 1000 may concatenate the encoded image Zᵢ₂, the adjusted mask map Mᵣ, and the next noise information Zₙ₋₁ and may input concatenated data to the second generative model 1200. The electronic device 1000 may repeatedly perform a denoising operation until an output of the second generative model 1200 becomes final noise information Z₀. The electronic device 1000 may obtain a final generated image by inputting the final noise information to the decoder 1400.

According to an embodiment of the disclosure, a first generative model has a lower computational cost and a higher inference speed than a second generative model. According to an embodiment of the disclosure, the computational cost of the second generative model may be reduced and the inference speed of the second generative model may be improved by using data obtained by adding noise to an output image of the first generative model as noise of a specific denoising order of the second generative model.

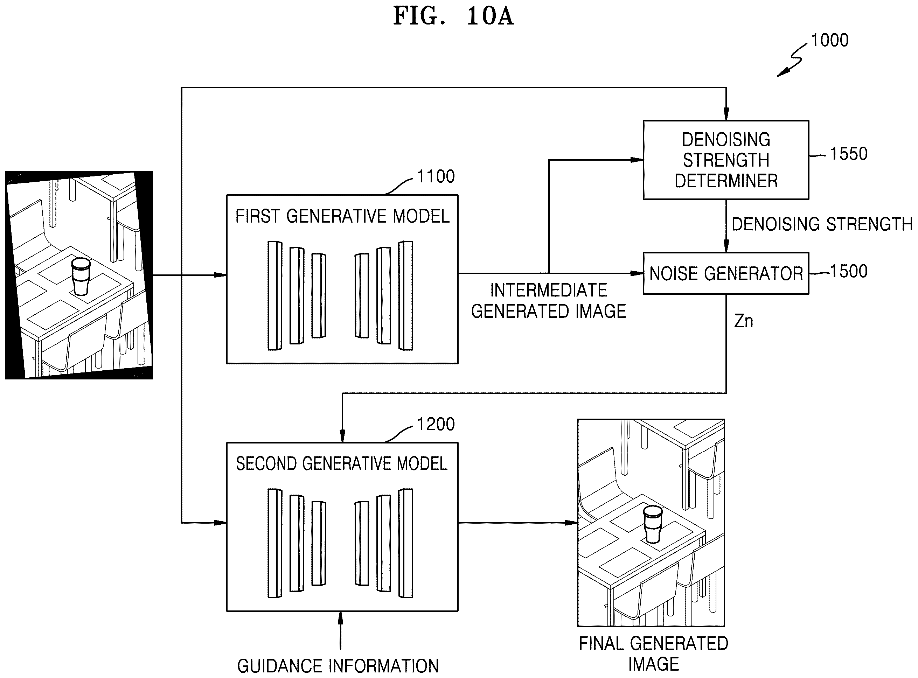

FIGS. 10A to 10C are conceptual diagrams for describing an embodiment of determining a denoising strength according to the quality of an intermediate generated image, according to an embodiment of the disclosure. The same description as that made with reference to FIGS. 1 to 9B will be omitted.

In an embodiment of the disclosure, the electronic device 1000 may include a denoising strength determiner 1550. The denoising strength determiner 1550 may obtain a predicted confidence value of an intermediate generated image based on the intermediate generated image. For example, a predicted confidence value may be determined based on a confidence score value for an image input by the first generative model 1100. However, the disclosure is not limited thereto, and a predicted confidence value may be determined by using any method of measuring the quality of an image. The denoising strength determiner 1550 may determine a denoising strength based on the predicted confidence value.

In an embodiment of the disclosure, the denoising strength determiner 1550 may identify a size and/or a shape of a partial area (e.g., an unknown area or a masked area) based on an input image. The denoising strength determiner 1550 may determine a denoising strength based on the identified size and/or shape. For example, as a size of an unknown area increases, the prediction performance of the first generative model 1100 may decrease. The denoising strength determiner 1550 may increase a denoising strength as a size of an unknown area increases. In an example case in which a shape of an unknown area is a specific shape, prediction performance of the first generative model 1100 may decrease. The denoising strength determiner 1550 may differently determine a denoising strength according to the identified shape. In an embodiment of the disclosure, in order to identify a shape of an unknown area, a pre-trained classification model for classifying a shape of an area may be used.

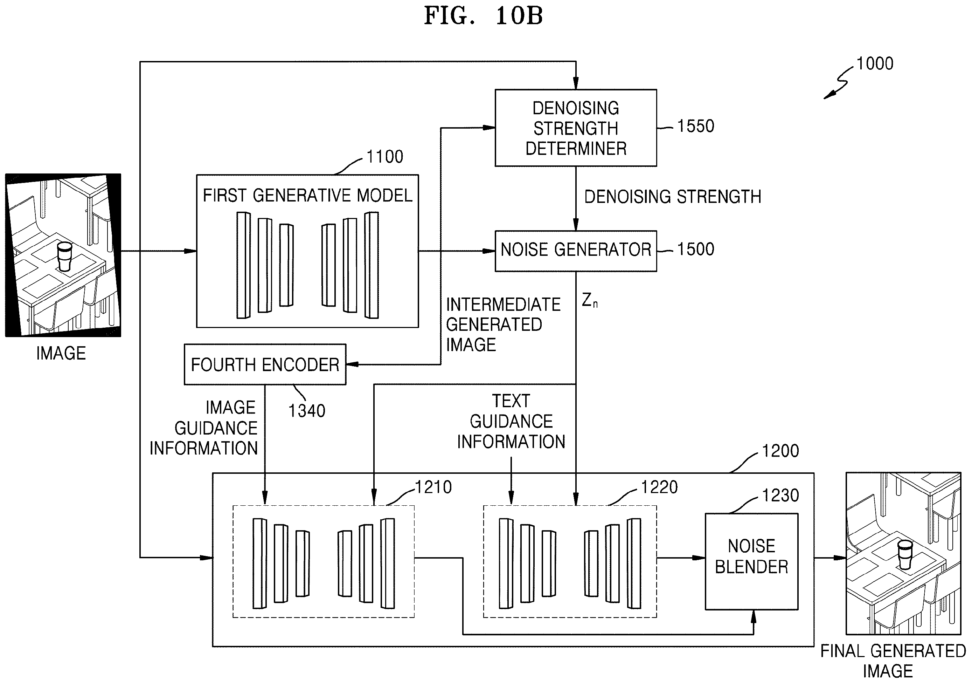

Referring to FIG. 10B, the electronic device 1000 may include the fourth encoder 1340. A configuration, a function, and an operation of the fourth encoder 1340 correspond to a configuration, a function, and an operation of the fourth encoder 1340 of FIGS. 5D to 5F, and thus, a repeated description thereof will be omitted. The second generative model 1200 may include the first neural network 1210, the second neural network 1220, and the noise blender 1230. Configurations, functions, and operations of the first neural network 1210, the second neural network 1220, and the noise blender 1230 correspond to configurations, functions, and operations of the first neural network 1210, the second neural network 1220, and the noise blender 1230 of FIGS. 5F and 5G, and thus, a repeated description thereof will be omitted. The fourth encoder 1340 may encode an intermediate generated image. The encoded intermediate generated image may be referred to as image guidance information or image embedding. The electronic device 1000 may input the image guidance information to at least one layer of the first neural network 1210. The electronic device 1000 may input text guidance information (or also referred to as text embedding) to at least one layer of the second neural network 1220.

The noise generator 1500 may add noise to the intermediate generated image based on a denoising strength. An intermediate generated image Zₙ to which noise is added may be used as current noise information having an identified denoising order (e.g., n) of the first neural network 1210 and/or the second neural network 1220. Although the intermediate generated image Zₙ to which noise is added is input to both the first neural network 1210 and the second neural network 1220 in FIG. 10B, the disclosure is not limited thereto. The intermediate generated image Zₙ to which noise is added may be input to at least one of the first neural network 1210 or the second neural network 1220. The first neural network 1210 and/or the second neural network 1220 may obtain next noise information (e.g., Zₙ₋₁) by using an image (e.g., a masked image), the intermediate generated image Zₙ to which noise is added, and guidance information (e.g., image guidance information and/or text guidance information) as an input.

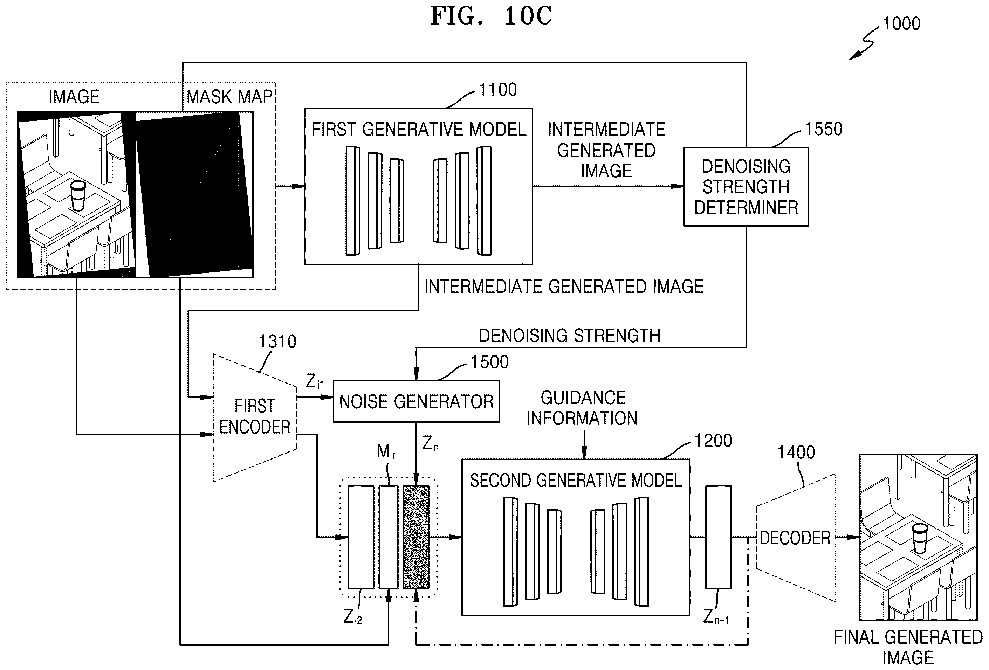

Referring to FIG. 10C, the denoising strength determiner 1550 may identify a size and/or a shape of a masked area in an image from a mask map. The denoising strength determiner 1550 may determine a denoising strength based on at least one of a predicted confidence value, the size of the partial area, or the shape of the partial area.

FIG. 11 is a conceptual diagram for describing an electronic device for generating a partial area of an image by using a generative model, according to an embodiment of the disclosure. The same description as that made with reference to FIGS. 1 to 10C will be omitted.

In an embodiment of the disclosure, the electronic device 1000 may include the fifth encoder 1350 and the second generative model 1200. The electronic device 1000 may obtain an image including information of a pre-set partial area. For example, the partial area may be referred to as an unknown area or a masked area. The image may include color information about an area other than the partial area.

According to an embodiment, the image may include a mask map as described with reference to FIG. 3. The electronic device 1000 may obtain a mask map that distinguishes the partial area (or a target area) from an entire area of the image. Here, the partial area may be a pre-set area. For example, the electronic device 1000 may generate a mask map based on the image. The electronic device 1000 may concatenate the mask map to the image.

The electronic device 1000 may transmit the image including the information of the partial area to the fifth encoder 1350. The fifth encoder 1350 may be an Al model pre-trained to encode an image. The encoded image may be used as guidance information for the second generative model 1200. The second generative model 1200 may output a final generated image by using the image including the information of the partial area and the image encoded by the fifth encoder 1350 as an input.

In an embodiment of the disclosure, the electronic device 1000 may include the first encoder 1310 and the decoder 1400. The electronic device 1000 may encode the image including the information of the partial area by using the first encoder 1310. The electronic device 1000 may decode an output of the second generative model by using the decoder 1400.

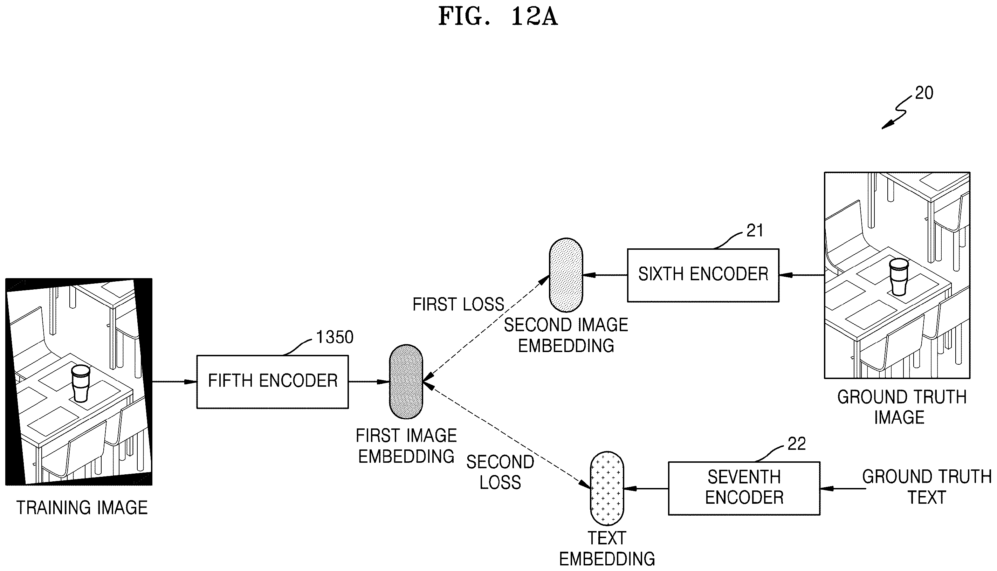

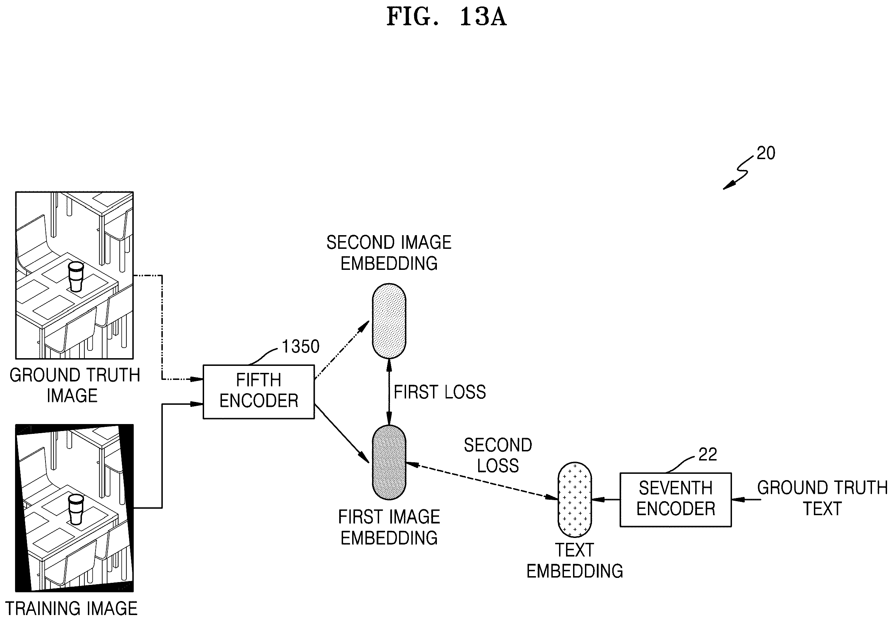

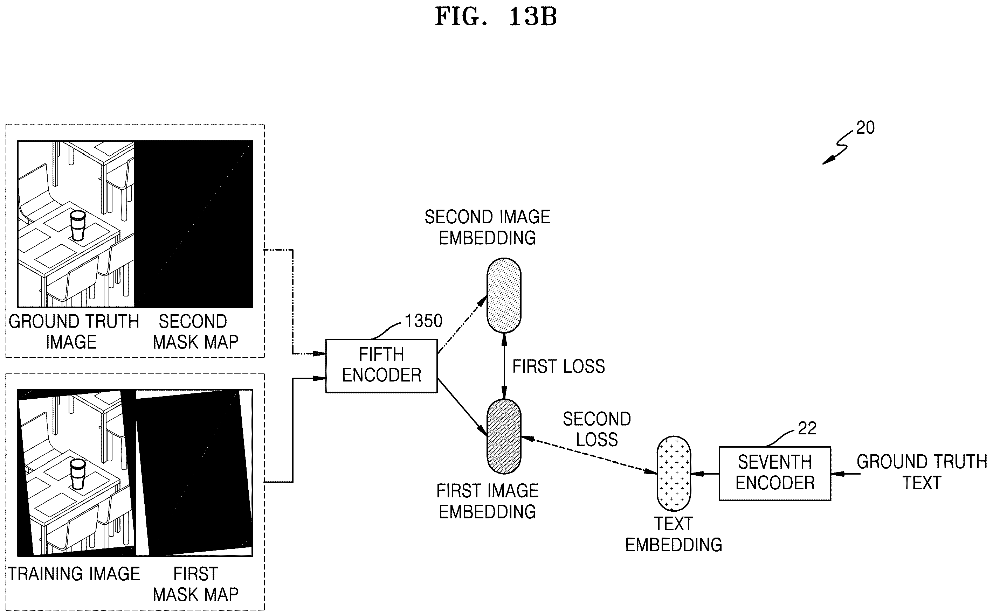

FIGS. 12A to 12B are conceptual diagrams for describing a method of training a fifth encoder, according to an embodiment of the disclosure. FIGS. 13A and 13B are conceptual diagrams for describing a method of training a fifth encoder, according to another embodiment of the disclosure. The same description as that made with reference to FIGS. 1 to 11 will be omitted.

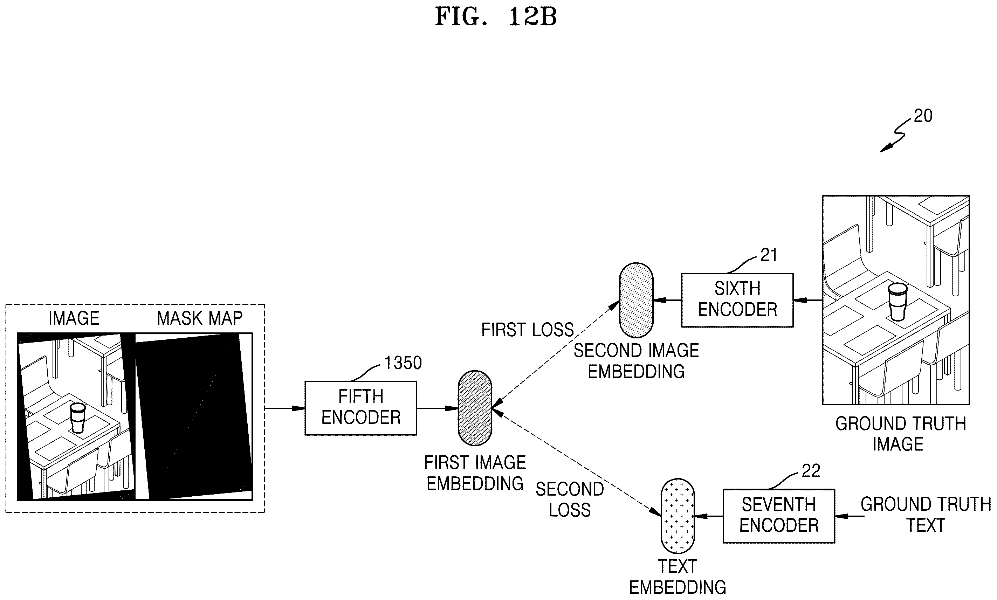

Referring to FIGS. 12A and 12B, an encoder training system 20 may include the fifth encoder 1350, a sixth encoder 21, and a seventh encoder 22. The fifth encoder 1350 may be an Al model whose training has not been completed. The encoder training system 20 may train the fifth encoder 1350. In an embodiment of the disclosure, the fifth encoder 1350 may be an Al model that is pre-trained. The encoder training system 20 may train the fifth encoder 1350 through an additional training method such as fine-tuning.

Referring to FIG. 12A, the encoder training system 20 may obtain a training image (also referred to as a first image) including information about a partial area (e.g., image information) from among an entire area. For example, the training image may include image information about an area other than the partial area from among the entire area. The encoder training system 20 may input the training image to the fifth encoder 1350. The fifth encoder 1350 may output first image embedding by encoding the training image.

The encoder training system 20 may obtain a ground truth image (also referred to as a second image) including image information about the entire area. In the disclosure, the term 'ground truth image' may refer to a ground truth image to be inferred from a training image. The encoder training system 20 may input the ground truth image to the sixth encoder 21. The sixth encoder 21 may output second image embedding by encoding the ground truth image. In an embodiment of the disclosure, the sixth encoder 21 may be a pre-trained Al model. For example, the sixth encoder 21 may be an image encoder portion of a contrastive language-image pretraining (CLIP) model that is pre-trained.

In an embodiment of the disclosure, the sixth encoder 21 may no longer be trained in a pre-trained state. For example, the sixth encoder 21 may be pre-trained and may have fixed parameters. The parameters of the sixth encoder 21 may no longer be updated.

The encoder training system 20 may obtain first loss based on the first image embedding and the second image embedding. For example, the encoder training system 20 may calculate a similarity between the first image embedding and the second image embedding. The encoder training system 20 may obtain first loss based on the similarity. For example, as the similarity increases, first loss may decrease.

The encoder training system 20 may obtain ground truth text indicating the ground truth image. In the disclosure, the term 'ground truth text' may refer to a sentence that describes a ground truth image to be inferred from a training image. The encoder training system 20 may input the ground truth text to the seventh encoder 22. The seventh encoder 22 may output text embedding by encoding the ground truth text. In an embodiment of the disclosure, the seventh encoder 22 may be a pre-trained Al model. For example, the seventh encoder 22 may be a text encoder portion of a CLIP model that is pre-trained.

In an embodiment of the disclosure, the seventh encoder 22 may no longer be trained in a pre-trained state. For example, the seventh encoder 22 may be pre-trained and may have fixed parameters. The parameters of the seventh encoder 22 may no long be updated.

The encoder training system 20 may obtain second loss based on the first image embedding and the text embedding. For example, the encoder training system 20 may calculate a similarity between the first image embedding and the text embedding. The encoder training system 20 may obtain second loss based on the similarity. For example, as the similarity increases, the second loss may decrease. In an embodiment of the disclosure, although second loss may be obtained by using a contrastive loss method, the disclosure is not limited thereto, and second loss may be obtained by using any loss calculation method (or loss function) for maximizing a similarity between first image embedding and text embedding.

In an embodiment of the disclosure, the encoder training system 20 may update at least one parameter (e.g., a weight value and/or a bias) of the fifth encoder 1350 based on the first loss and the second loss.

In an embodiment of the disclosure, at least one parameter of the sixth encoder 21 may not be updated, but the disclosure is not limited thereto. For example, the encoder training system 20 may update at least one parameter of the sixth encoder 21 based on the first loss and/or the second loss.

In an embodiment of the disclosure, at least one parameter of the seventh encoder 22 may not be updated, but the disclosure is not limited thereto. For example, the encoder training system 20 may update at least one parameter of the seventh encoder 22 based on the first loss and/or the second loss.

Referring to FIG. 12B, the fifth encoder 1350 may output first image embedding by using data, obtained by concatenating a mask map to the training image, as an input. In an embodiment of the disclosure, the fifth encoder 1350 may support a 4-channel input data format including three channels corresponding to the training image and one channel corresponding to the mask map. The sixth encoder 21 may support a 3-channel input data format corresponding to a ground truth image. However, the disclosure is not limited thereto, and the fifth encoder 1350 may support an input data format including more channels than the sixth encoder by the number of channels of the mask map.

Referring to FIGS. 13A and 13B, the encoder training system 20 may include the fifth encoder 1350 and the seventh encoder 22. In an embodiment of the disclosure, the sixth encoder 21 of FIGS. 12A and 12B may be the same encoder as the fifth encoder 1350.

Referring to FIG. 13A, the fifth encoder 1350 may output first image embedding by using a training image as an input in an arbitrary training step (e.g., iteration). In the same training step in which the first image embedding is output, the fifth encoder 1350 may output second image embedding by using a ground truth image as an input. The encoder training system 20 may obtain first loss based on the first image embedding and the second image embedding. The seventh encoder 22 may output text embedding by using the ground truth text as an input. The encoder training system 20 may obtain second loss based on the first image embedding and the text embedding. The encoder training system 20 may update at least one parameter (e.g., a weight value and/or a bias) of the fifth encoder 1350 based on the first loss and the second loss.

Referring to FIG. 13B, the fifth encoder 1350 may output first image embedding by using data, obtained by concatenating a first mask map to a training image, as an input. The first mask map may include a binary value and a coordinate value that distinguishes a partial area (e.g., an unknown area or a masked area) from an entire area. The fifth encoder 1350 may output second image embedding by using data, obtained by concatenating a second mask map to a ground truth image, as an input. Because the second mask map has no unknown area, an entire area may include one value.

Referring to FIG. 11 together with FIGS. 12A to 13B, the fifth encoder 1350 trained by the encoder training system 20 may receive and encode third image (e.g., an image including information of a partial area). The trained fifth encoder 1350 may output first image embedding corresponding to the third image. The first image embedding may also be referred to as guidance information or image guidance information. The first image embedding may be input to at least one layer of the second generative model 1200 that infers a fourth image (e.g., a final generated image) at least partially different from the third image by using the third image as an input.

According to an embodiment of the disclosure, because the sixth encoder 21 of FIGS. 12A and 12B is omitted, the memory capacity of the sixth encoder 21 may be further secured, the training cost of the fifth encoder may be reduced, and a training speed may be improved.

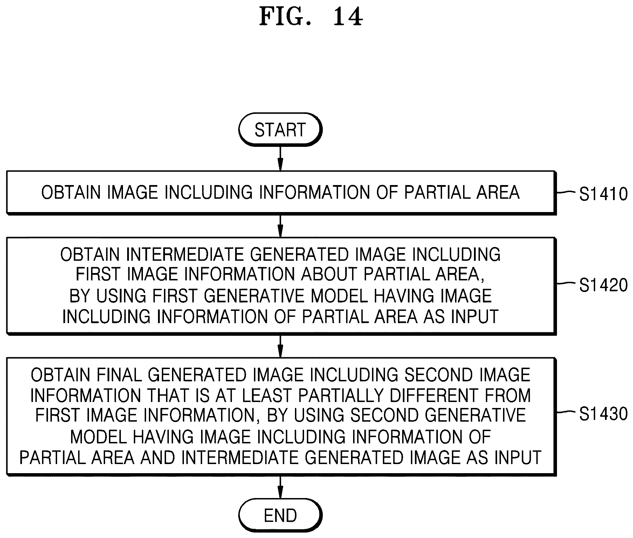

FIG. 14 is a flowchart for describing a method of generating a partial area of an image by using a generative model, according to an embodiment of the disclosure. The same description as that made with reference to FIGS. 1 to 13B will be omitted. For convenience of explanation, FIG. 14 will be described with reference to FIG. 1.

Referring to FIG. 14, a method of generating a partial area of an image by using a generative model may include operations S1410 to S1430. In an embodiment of the disclosure, operations S1410 to S1430 may be performed by the electronic device 1000 or a processor (not shown) of the electronic device 1000. However, the disclosure is not limited thereto, and operations S1410 to S1430 may be performed by any electronic device. A method of generating a partial area of an image by using a generative model according to an embodiment of the disclosure is not limited to that shown in FIG. 14, and any one of operations of FIG. 14 may be omitted or an operation not shown in FIG. 14 may be further included.

In operation S1410, the electronic device 1000 may obtain an image including information of a partial area. In an embodiment of the disclosure, the electronic device 1000 may obtain a mask map corresponding to the partial area. The electronic device 1000 may concatenate the mask map to the image including the information of the partial area.

In operation S1420, the electronic device 1000 may obtain an intermediate generated image including first image information about the partial area (e.g., an unknown area or a masked area) by using a first generative model having the image including the information of the partial area as an input. In an embodiment of the disclosure, the electronic device 1000 may obtain first pixel information from the first generative model 1100. In an embodiment of the disclosure, the electronic device 1000 may obtain an intermediate generated image by performing a blending operation between the first pixel information and original pixel information of an image on an area other than the partial area.

In operation S1430, the electronic device 1000 may obtain a final generated image including second image information that is at least partially different from the first image information, by using the second generative model 1200 having the image including the information of the partial area and the intermediate generate image as an input. In an embodiment of the disclosure, the electronic device 1000 may obtain second pixel information from the second generative model 1200. The electronic device 1000 may obtain a final generated image by performing a blending operation between the second pixel information and the original pixel information of the image on the area other than the partial area. In an embodiment of the disclosure, the second generative model 1200 may obtain a final generated image by repeatedly performing a denoising operation by as many times as a predefined total denoising order.

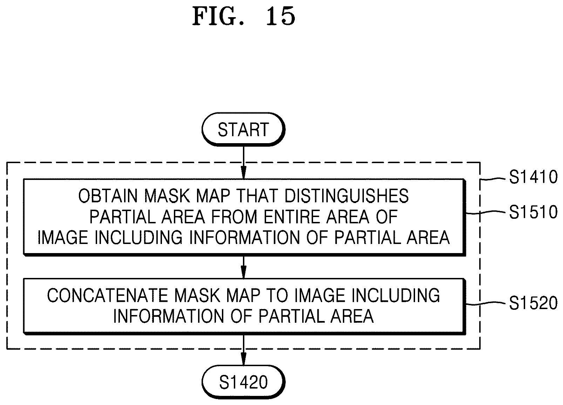

FIG. 15 is a flowchart for describing detailed operations of operation S1410 of FIG. 14. The same description as that made with reference to FIGS. 1 to 14 will be omitted. For convenience of explanation, FIG. 15 will be described with reference to FIG. 3.

Referring to FIG. 15, operation S1410 of FIG. 14 may include operations S1510 and S1520. In an embodiment of the disclosure, operations S1510 and S1520 may be performed by the electronic device 1000 or a processor (not shown) of the electronic device 1000. However, the disclosure is not limited thereto, and operations S1510 and S1520 may be performed by any electronic device. Detailed operations of operation S1410 according to the disclosure are not limited to those shown in FIG. 15, and any one of operations shown in FIG. 15 may be omitted or an operation not shown in FIG. 15 may be further included.

In operation S1510, the electronic device 1000 may obtain a mask map that distinguishes a partial area from an entire area of an image including information of the partial area. In an embodiment of the disclosure, the electronic device 1000 may obtain a mask map from an external server. In an embodiment of the disclosure, a mask map may be generated by distinguishing between a masked area of the image with a first value and an unmasked area of the image with a second value.

In operation S1520, the electronic device 1000 may concatenate the mask map to the image including the information of the partial area. In an embodiment of the disclosure, the electronic device 1000 may encode the image including the information of the partial area. The electronic device 1000 may concatenate the mask map to the encoded image. In an embodiment of the disclosure, the electronic device 1000 may further concatenate current noise information to the concatenated image. The electronic device 1000 may input data obtained by concatenating up to the current noise information to the second generative model 1200.

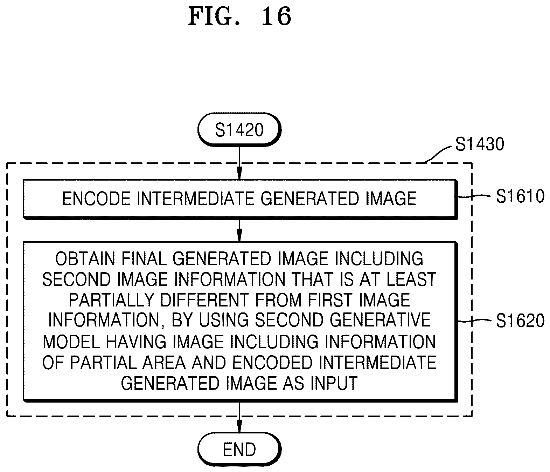

FIG. 16 is a flowchart for describing detailed operations of operation S1430 of FIG. 14. The same description as that made with reference to FIGS. 1 to 15 will be omitted. For convenience of explanation, FIG. 16 will be described with reference to FIGS. 5D and 5E.

Referring to FIG. 16, operation S1430 of FIG. 14 may include operations S1610 and S1620. In an embodiment of the disclosure, operations S1610 and S1620 may be performed by the electronic device 1000 or a processor of the electronic device 1000. However, the disclosure is not limited thereto, and operations S1610 and S1620 may be performed by any electronic device. Detailed operations of operation S1430 according to the disclosure are not limited to those shown in FIG. 16, and any one of operations shown in FIG. 16 may be omitted or an operation not shown in FIG. 16 may be further included.

In operation S1610, the electronic device 1000 may encode an intermediate generated image. The electronic device 1000 may encode the intermediate generated image by using a pre-trained encoder. In an embodiment of the disclosure, the encoded intermediate generated image may be input to at least one layer of the second generative model 1200. The encoded intermediate generated image may be used as guidance information for the second generative model 1200.

In operation S1620, the electronic device 1000 may obtain a final generated image including second image information that is at least partially different from the first image information, by using a second generative model having the image including the information of the partial area and the encoded intermediate generated image as an input. In an embodiment of the disclosure, the electronic device 1000 may obtain conversion data by inputting the encoded intermediate generated image to an interpreter. The electronic device 1000 may input the conversion data to the at least one layer of the second generative model.

In an embodiment of the disclosure, the electronic device 1000 may transmit the intermediate generated image to the second generative model 1200. The electronic device 1000 may obtain a final generated image including second image information that is at least partially different from the first image information, by using the second generative model having the image having the information of the partial area, the intermediate generated image, and the encoded intermediate generated image as an input.

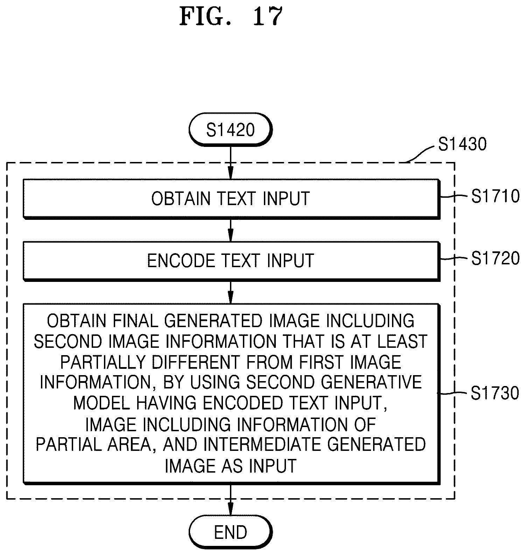

FIG. 17 is a flowchart for describing detailed operations of operation S1430 of FIG. 14. The same description as that made with reference to FIGS. 1 to 16 will be omitted. For convenience of explanation, FIG. 17 will be described with reference to FIG. 5A.

Referring to FIG. 17, operation S1430 of FIG. 14 may include operations S1710 to S1730. In an embodiment of the disclosure, operations S1710 to S1730 may be performed by the electronic device 1000 or a processor (not shown) of the electronic device 1000. However, the disclosure is not limited thereto, and operations S1710 to S1730 may be performed by any electronic device. Detailed operations of operation S1430 according to the disclosure are not limited to those shown in FIG. 17, and any one of operations shown in FIG. 17 may be omitted or an operation not shown in FIG. 17 may be further included.

In operation S1710, the electronic device 1000 may obtain a text input. In an embodiment of the disclosure, the electronic device 1000 may obtain a text input from an external server. In an embodiment of the disclosure, the electronic device 1000 may obtain a text input from a user interface. For example, the text input may include a sentence that describes the image including the information of the partial area or a final generated image.

In operation S1720, the electronic device 1000 may encode the text input. The electronic device 1000 may encode the text input by using a pre-trained encoder. In an embodiment of the disclosure, the encoded text input may be input to at least one layer of the second generative model 1200. The encoded text input may be used as guidance information in the second generative model 1200.

In operation S1730, the electronic device 1000 may obtain a final generated image including second image information that is at least partially different from the first image information, by using the second generative model 1200 having the encoded text input, the image including the information of the partial area, and the intermediate generated image as an input. In an embodiment of the disclosure, the electronic device 1000 may generate current noise information based on the intermediate generated image. The electronic device 1000 may input the image including the information of the partial area and the current noise information to the second generative model 1200. The electronic device 1000 may input the encoded text input to the at least one layer of the second generative model 1200. The electronic device 1000 may obtain next noise information from the second generative model 1200.

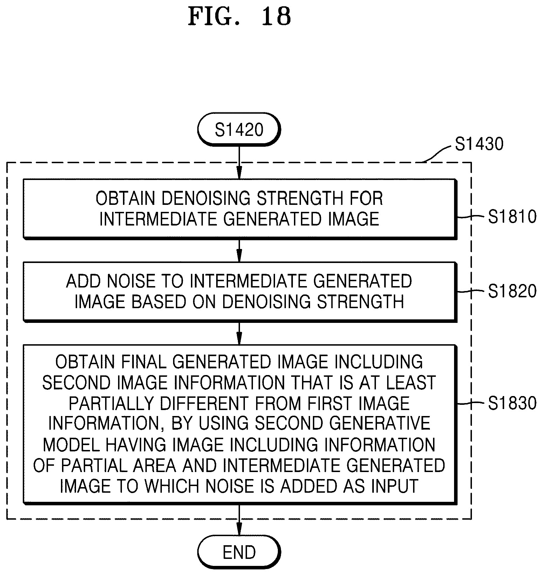

FIG. 18 is a flowchart for describing detailed operations of operation S1430 of FIG. 14. The same description as that made with reference to FIGS. 1 to 17 will be omitted. For convenience of explanation, FIG. 18 will be described with reference to FIGS. 9A and 9B.

Referring to FIG. 18, operation S1430 of FIG. 14 may include operations S1810 to S1830. In an embodiment of the disclosure, operations S1810 to S1830 may be performed by the electronic device 1000 or a processor (not shown) of the electronic device 1000. However, the disclosure is not limited thereto, and operations S1810 to S1830 may be performed by any electronic device. Detailed operations of operation S1430 according to the disclosure are not limited to those shown in FIG. 18, and any one of operations shown in FIG. 18 may be omitted or an operation not shown in FIG. 18 may be further included.

In operation S1810, the electronic device 1000 may obtain a denoising strength for the intermediate generated image. In an embodiment of the disclosure, the denoising strength may correspond to the amount of noise to be added to the intermediate generated image. In an embodiment of the disclosure, the denoising strength may be predefined. In an embodiment of the disclosure, the electronic device 1000 may obtain a predicted confidence value based on the intermediate generated image. The electronic device 1000 may determine a denoising strength based on the predicted confidence value. The electronic device 1000 may identify a size and/or a shape of the partial area (e.g., masked area) based on a mask map. The electronic device 1000 may determine a denoising strength based on the size and/or the shape of the partial area (e.g., the masked area).

In operation S1820, the electronic device 1000 may add noise to the intermediate generated image based on the denoising strength. In an embodiment of the disclosure, as the denoising strength increases, the amount of noise to be added may increase.

In operation S1830, the electronic device 1000 may obtain a final generated image including second image information that is at least partially different from the first image information, by using the second generative model 1200 having the image including the information of the partial area and the intermediate generated image to which the noise is added as an input.

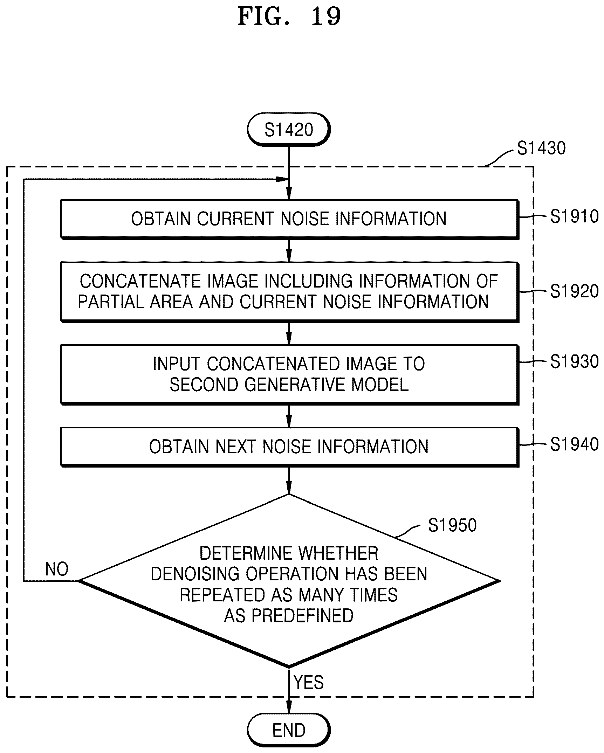

FIG. 19 is a flowchart for describing detailed operations of operation S1430 of FIG. 14. The same description as that made with reference to FIGS. 1 to 18 will be omitted. For convenience of explanation, FIG. 19 will be described with reference to FIGS. 9A and 9B.

Referring to FIG. 19, operation S1430 of FIG. 14 may include operations S1910 to S1950. In an embodiment of the disclosure, operations S1910 to S1950 may be performed by the electronic device 1000 or a processor (not shown) of the electronic device 1000. However, the disclosure is not limited thereto, and operations S1910 to S1950 may be performed by any electronic device. Detailed operations of operation S1430 according to the disclosure are not limited to those shown in FIG. 19, and any one of operations shown in FIG. 19 may be omitted or an operation not shown in FIG. 19 may be further included.

In operation S1910, the electronic device 1000 may obtain current noise information. In an embodiment of the disclosure, the electronic device 1000 may obtain current noise information from an output of the second generative model 1200. In an embodiment of the disclosure, in the case of an initial denoising order, there is no output of the second generative model 1200. In this case, the electronic device 1000 may generate current noise information including random values. In an embodiment of the disclosure, the electronic device 1000 may generate current noise information including random values according to Gaussian noise.

In operation S1920, the electronic device 1000 may concatenate the current noise information to the image (or encoded image) including the information of the partial area. In an embodiment of the disclosure, the electronic device 1000 may concatenate a mask map or a mask map whose size is adjusted to have a location and a width of the image including the information of the partial area to the current noise information and the image including the information of the partial area.

In operation S1930, the electronic device 1000 may input the concatenated image to the second generative model 1200. In an embodiment of the disclosure, the second generative model 1200 may output next noise information based on the concatenated image by performing a denoising operation.

In operation S1940, the electronic device 1000 may obtain next noise information that is an output of the second generative model 1200.

In operation S1950, the electronic device 1000 may determine whether the denoising operation has been repeated as many times as a predefined total denoising order. In an example case in which it is determined that the denoising operation has been repeated as many times as the predefined total denoising order (Yes), the electronic device 1000 may generate a final generated image based on the next noise information. In an example case in which it is determined that the denoising operation has not been performed as many times as the predefined total denoising order (No), the procedure returns to operation S1910. The next noise information may be current noise information of a next denoising order.

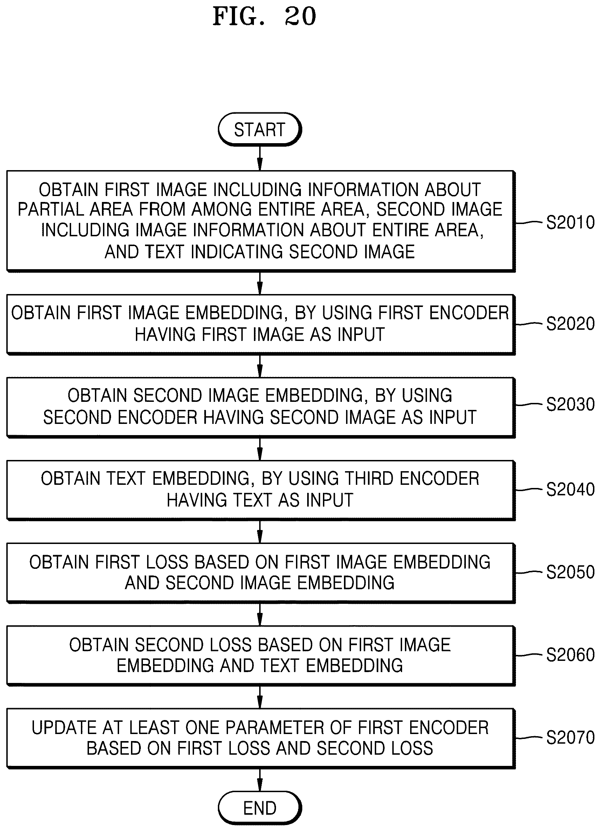

FIG. 20 is a flowchart for describing a method of training an encoder for encoding an image, according to an embodiment of the disclosure. The same description as that made with reference to FIGS. 1 to 19 will be omitted. For convenience of explanation, FIG. 20 will be described with reference to FIGS. 12A and 13B. Configurations, functions, and operations of the fifth encoder 1350, the sixth encoder 21, and the seventh encoder 22 of FIGS. 12A and 13B may respectively correspond to configurations, functions, and operations of the first encoder, the second encoder, and the third encoder of FIG. 20.

Referring to FIG. 20, a method of training an encoder for encoding an image may include operations S2010 to S2070. In an embodiment of the disclosure, operations S2010 to S2070 may be performed by the encoder training system 20, and at least some of functions of the encoder training system 20 may be performed by any electronic device or a processor of any electronic device. A method of training an encoder for encoding an image according to an embodiment of the disclosure is not limited to that shown in FIG. 20, and any one of operations shown in FIG. 20 may be omitted and an operation not shown in FIG. 20 may be further included.

In operation S2010, the encoder training system 20 may obtain a first image including information about a partial area from among an entire area, a second image including image information about the entire area, and text indicating the second image. In an embodiment of the disclosure, the encoder training system 20 may concatenate a first mask map that distinguishes the partial area from the entire area to the first image.

In operation S2020, the encoder training system 20 may obtain first image embedding by using a first encoder having the first image as an input.

In operation S2030, the encoder training system 20 may obtain second image embedding by using a second encoder having the second image as an input. In an embodiment of the disclosure, the second encoder may be a pre-trained Al model. In an embodiment of the disclosure, the second encoder may no longer be trained in a pre-trained state. For example, the second encoder may have fixed parameters but may no longer be updated. In an embodiment of the disclosure, the first encoder and the second encoder may be the same encoder. In this case, an encoder corresponding to the first encoder and the second encoder may be an encoder whose training has not been completed. For example, although training may not be performed on the encoder corresponding to the first encoder and the second encoder, the disclosure is not limited thereto and the encoder may be a pre-trained Al model. The pre-trained encoder may be additionally trained through an additional training method such as fine-tuning. In an embodiment of the disclosure, the encoder training system 20 may concatenate a second mask map in which the entire area includes one value, to the second image.

In operation S2040, the encoder training system 20 may obtain text embedding by using a third encoder having text as an input. In an embodiment of the disclosure, the third encoder may be a pre-trained Al model. In an embodiment of the disclosure, the third encoder may no longer be trained in a pre-trained state. For example, the third encoder may have fixed parameters but may no longer be updated.

In operation S2050, the encoder training system 20 may obtain first loss based on the first image embedding and the second image embedding.

In operation S2060, the encoder training system 20 may obtain second loss based on the first image embedding and the text embedding.

In operation S2070, the encoder training system 20 may update at least one parameter of the first encoder based on the first loss and the second loss. In an embodiment of the disclosure, the encoder training system 20 may update at least one parameter of the second encoder and/or the third encoder based on the first loss and the second loss. In an embodiment of the disclosure, the encoder training system 20 may repeatedly update at least one parameter of the first encoder, the second encoder, and/or the third encoder during a predefined training order.

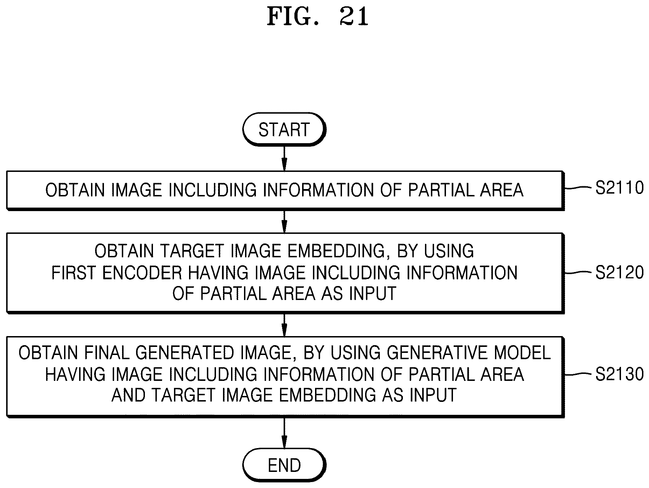

FIG. 21 is a flowchart for describing a method of generating a partial area of an image by using a generative model, according to an embodiment of the disclosure. The same description as that made with reference to FIGS. 1 to 20 will be omitted. For convenience of explanation, FIG. 21 will be described with reference to FIG. 11. Configurations, functions, and operations of the fifth encoder 1350 and the second generative model 1200 of FIG. 11 may correspond to configurations, functions, and operations of the first encoder and the generative model of FIG. 21.

Referring to FIG. 21, a method of generating a partial area of an image by using a generative model may include operations S2110 to S2130. In an embodiment of the disclosure, operations S2110 to S2130 may be performed by the electronic device 1000 or a processor (not shown) of the electronic device 1000. However, the disclosure is not limited thereto, and operations S2110 to S2130 may be performed by any electronic device. A method of generating a partial area of an image by using a generative model according to an embodiment of the disclosure is not limited to that shown in FIG. 21, and any one of operations shown in FIG. 21 may be omitted or an operation not shown in FIG. 21 may be further included.

In operation S2110, the electronic device 1000 may obtain an image including information of a partial area.

In operation S2120, the electronic device 1000 may obtain target image embedding, by using a first encoder having the image including the information of the partial area as an input. In an embodiment of the disclosure, the first encoder may be trained by obtaining a first training image including location information about the partial area from among an entire area, a second training image including image information about the entire area, and training text indicating the second training image, obtaining first image embedding by using the first encoder having the first training image as an input, obtaining second image embedding by using a second encoder having the second training image as an input, obtaining text embedding by using a third encoder having the training text as an input, obtaining first loss based on the first image embedding and the second image embedding, obtaining second loss based on the first image embedding and the text embedding, and updating at least one parameter of the first encoder based on the first loss and the second loss. In an embodiment of the disclosure, the electronic device 1000 may update at least one parameter of the second encoder and/or the third encoder based on the first loss and/or the second loss.

In operation S2130, the electronic device 1000 may obtain a final generated image, by using a generative model having the image including the information of the partial area and the target image embedding as an input.

In an embodiment of the disclosure, the generative model may include a first neural network that outputs a final generated image based on the image including the information of the partial area. In an embodiment of the disclosure, the electronic device 1000 may input the target image embedding to at least one layer of the first neural network. In an embodiment of the disclosure, the generative model may include an interpreter that converts the target image embedding and transmits the converted target image embedding to the at least one layer of the first neural network. In an embodiment of the disclosure, the interpreter of the generative model may include a first single-layer perceptron and a second single-layer perceptron. In an embodiment of the disclosure, the interpreter of the generative model may include three or more single-layer perceptrons. In an embodiment of the disclosure, the interpreter of the generative model may include a unique single-layer perceptron.

In an embodiment of the disclosure, the electronic device 1000 may obtain intermediate image embedding by using the first single-layer perceptron having the target image embedding as an input. The electronic device 1000 may obtain resulting image embedding by using the second single-layer perceptron having the intermediate image embedding as an input. The electronic device 1000 may input the resulting image embedding to the at least one layer of the first neural network.

In an embodiment of the disclosure, the electronic device 1000 may include multiple next single-layer perceptrons having image embedding output from a previous single-layer perceptron as an input and may obtain resulting image embedding by using a last single-layer perceptron. In an embodiment of the disclosure, the electronic device 1000 may immediately obtain resulting image embedding by using the first single-layer perceptron.

In an embodiment of the disclosure, the generative model may output first noise based on the image including the information of the partial area. The generative model may output second noise based on the image including the information of the partial area. The generative model may include an interpreter that converts the target image embedding and transmits the converted target image embedding to the at least one layer of the first neural network.

In an embodiment of the disclosure, the generative model may include a first neural network and a second neural network. The first neural network may output first noise by using at least one of the image including the information of the partial area, an intermediate generated image, or image guidance information. The second neural network may output second noise by using at least one of the image including the information of the partial area, the intermediate generated image, or text guidance information.

In an embodiment of the disclosure, the electronic device 1000 may obtain target text corresponding to the image including the information of the partial area. The electronic device 1000 may obtain target text embedding based on the target text. The electronic device 1000 may input the target text embedding to at least one layer of the second neural network.

In an embodiment of the disclosure, the electronic device 1000 may obtain a final generated image based on the first noise and the second noise. In an embodiment of the disclosure, the electronic device 1000 may obtain next noise information by doing a weighted sum on the first noise and the second noise.

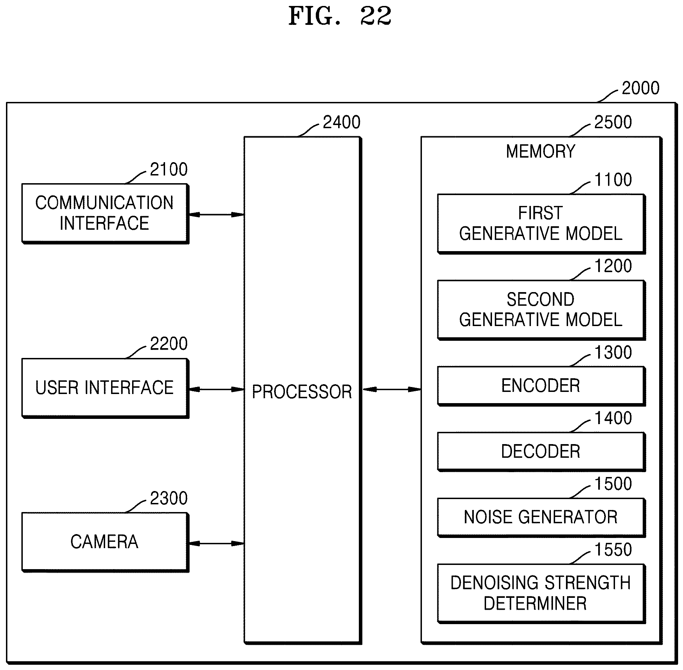

FIG. 22 is a block diagram for describing a configuration of a user device, according to an embodiment of the disclosure. The same description as that made with reference to FIGS. 1 to 21 will be omitted. Configurations, functions, and operations of the electronic device 1000 of FIGS. 1 to 11 may correspond to configurations, functions, and operations of a user device 2000 of FIG. 22.

Referring to FIG. 22, the user device 2000 may include a communication interface 2100, a user interface 2200, a camera 2300, a processor 2400, and a memory 2500. However, not all of the illustrated elements are essential elements. The user device 2000 may include more or fewer elements than those shown in FIG. 22.

The communication interface 2100 may include at least one element for performing communication between the user device 2000 and a server device (not shown), between the user device 2000 and an arbitrary electronic device(not shown), and between the user device 2000 and another user device(not shown).

In an embodiment of the disclosure, the user device 2000 may receive an image including a partial area (or a masked area) from the server device through the communication interface 2100. The user device 2000 may receive a mask map from the server device through the communication interface 2100. The user device 2000 may receive a text input from the server device through the communication interface 2100. The user device 2000 may receive various hyperparameters (e.g., a total denoising order) required to infer a final generated image from another electronic device through the communication interface 2100. The user device 2000 may receive a pre-trained generative model and/or a pre-trained encoder from the server device through the communication interface 2100.

The user interface 2200 may include an input interface and an output interface.

The input interface may be used to receive an input (hereinafter, a user input) from a user. The input interface may be at least one of, but not limited to, a key pad, a dome switch, a touch pad (e.g., contact capacitance type, pressure resistive type, infrared (IR) detection type, surface ultrasonic wave conduction type, integral tension measuring type, or piezoelectric effect type), a jog wheel, a jog switch, or a microphone.

In an embodiment of the disclosure, the user device 2000 may receive hyperparameters set by the user through the input interface. The user device 2000 may receive an image and/or text through the input interface. In an embodiment of the disclosure, the user device 2000 may obtain an audio signal obtained by processing the user's voice through the microphone. The user device 2000 may convert the audio signal into text.

The output interface is used to output an audio signal or a video signal and may include, for example, a display or a speaker.

In an embodiment of the disclosure, the user device 2000 may display an image through the display. For example, the user device 2000 may display a GUI corresponding to the input interface through the display. For example, the user device 2000 may display the image through the display. The user device 2000 may receive a user input that designates a partial area of the image displayed on the display through the input interface. The user device 2000 may mask the partial area of the image based on the user input.

In an embodiment of the disclosure, the user device 2000 may receive a user input that rotates the image displayed on the display and/or adjusts a size of the image displayed on the display through the input interface. The user device 2000 may mask an area having no image information within a predefined image size based on the user input.

In an embodiment of the disclosure, the user device 2000 may receive a user input (e.g., an arbitrary line or shape) drawn on the image displayed on the display through the input interface. The user device 2000 may mask an area corresponding to the user input.

In an embodiment of the disclosure, the user device 2000 may segment at least one object area in the image by using an Al model that performs object segmentation. The Al model may be stored in the memory 2500 of the user device 2000. In this case, the processor 2400 of the user device 2000 may output a segmentation result by inputting the image to the Al model. In another example, the processor 2400 may receive a segmentation result of an Al model from a device (e.g., a server) outside the user device 2000. The user device 2000 may display the image and the segmentation result together on the display. The user device 2000 may receive a user input that selects at least one object displayed on the display through the input interface. The user device 2000 may determine an object corresponding to the user input from among objects according to the segmentation result. The user device 2000 may mask an area of the determined object. However, the disclosure is not limited thereto, and the user device 2000 may combine and mask the area of the determined object and the area corresponding to the user input (e.g., arbitrary line or shape) drawn on the image displayed on the display. In an embodiment of the disclosure, the user device 2000 may display the image through the display. In an embodiment of the disclosure, the user device 2000 may display the image through the display. The user device 2000 may receive a user input that corresponds to at least one location value of the image displayed on the display through the input interface. For example, the at least one location value may include a coordinate value of an image pixel. For example, the at least one location value may include coordinate values of an image pixel corresponding to a boundary of a specific area in the image. The user device 2000 may obtain a segmentation map that distinguishes between an area of an object corresponding to the at least one location value and other areas, by using an Al model having the at least one location value as an input. The user device 2000 may mask an area of an object corresponding to a user input based on the segmentation map.

For example, the display may include at least one of a liquid crystal display, a thin-film transistor-liquid crystal display, a light-emitting diode (LED), an organic light-emitting diode, a flexible display, a three-dimensional (3D) display, or an electrophoretic display. Two or more displays may be included according to an implementation type of the user device 2000.

The speaker may output an audio signal received from the communication interface 2100 or stored in the memory 2500.

The camera 2300 may generate an image by photographing a surrounding space. The camera 2300 may include an image sensor. In an embodiment of the disclosure, the user device 2000 may train the first generative model 1100 and/or the second generative model 1200 based on the image captured by the camera 2300. In an embodiment of the disclosure, the user device 2000 may obtain a final generated image by inputting the image captured by the camera 2300 to the first generative model 1100 and/or the second generative model 1200.

The processor 2400 may control an overall operation of the user device 2000 by using a program or information stored in the memory 2500. The processor 2400 may be implemented through a combination of software and a general-purpose processor such as an application processor (AP), a central processing unit (CPU), or a graphics processing unit (GPU). In the case of a dedicated processor, a memory for implementing an embodiment of the disclosure may be included, or a memory processing unit for using an external memory may be included.. The processor 2400 may include a plurality of processors. In this case, the processor 2400 may be implemented through a combination of dedicated processors, or may be implemented through a combination of software and a plurality of general-purpose processors such as an AP, a CPU, and a GPU.

In an embodiment of the disclosure, the processor 2400 may include an artificial intelligence (AI) processor. The Al processor may be manufactured in the form of a dedicated hardware chip for AI, or may be manufactured as a part of an existing general-purpose processor (e.g., a CPU or an AP) or a dedicated graphic processor (e.g., a GPU) and mounted on the user device 2000. The Al processor may perform an inference and/or training operation related to at least one of the first generative model 1100, the second generative model 1200, the encoder 1300, or the decoder 1400.

In an embodiment of the disclosure, the processor 2400 may infer a pre-designated area of an image based on image information excluding the pre-designated area of the image, by using the first generative model 1100 and/or the second generative model 1200. The pre-designated area may refer to an unknown area.

In an embodiment of the disclosure, the processor 2400 may train at least one of the first generative model 1100, the second generative model 1200, the encoder 1300, or the decoder 1400 by using a training data set stored in the memory 2500. The processor 2400 may store the first generative model 1100, the second generative model 1200, the encoder 1300, and/or the decoder 1400, which is trained, in the memory 2500.

The memory 2500 may store a program for processing by the processor 2400 or may store input/output data. In an embodiment of the disclosure, the memory 2500 may include at least one type of storage medium from among a flash memory type, a hard disk type, a multimedia card micro type, a card type memory (e.g., an SD or XD memory), a random-access memory (RAM), a static random-access memory (SRAM), a read-only memory (ROM), an electrically erasable programmable read-only memory (EEPROM), a programmable read-only memory (PROM), a magnetic memory, a magnetic disk, and an optical disk. Programs stored in the memory 2500 may be classified into a plurality of modules according to their functions.

In an embodiment of the disclosure, the memory 2500 may include the first generative model 1100, the second generative model 1200, the encoder 1300, the decoder 1400, the noise generator 1500, and the denoising strength determiner 1550.

Configurations, functions, and operations of the first generative model 1100, the second generative model 1200, the decoder 1400, the noise generator 1500, and the denoising strength determiner 1550 may correspond to configurations, functions, and operations of the first generative model 1100, the second generative model 1200, the decoder 1400, the noise generator 1500, and the denoising strength determiner 1550 of FIGS. 1 to 11. The encoder 1300 may include a plurality of encoders. Configurations, functions, and operations of the plurality of encoders may correspond to configurations, functions, and operations of the first encoder to the seventh encoder 1310, 1320, 1330, 1340, 1350, 21, and 22 of FIGS. 1 to 13B. Each of the plurality of encoders may be an encoder portion of a different auto encoder.

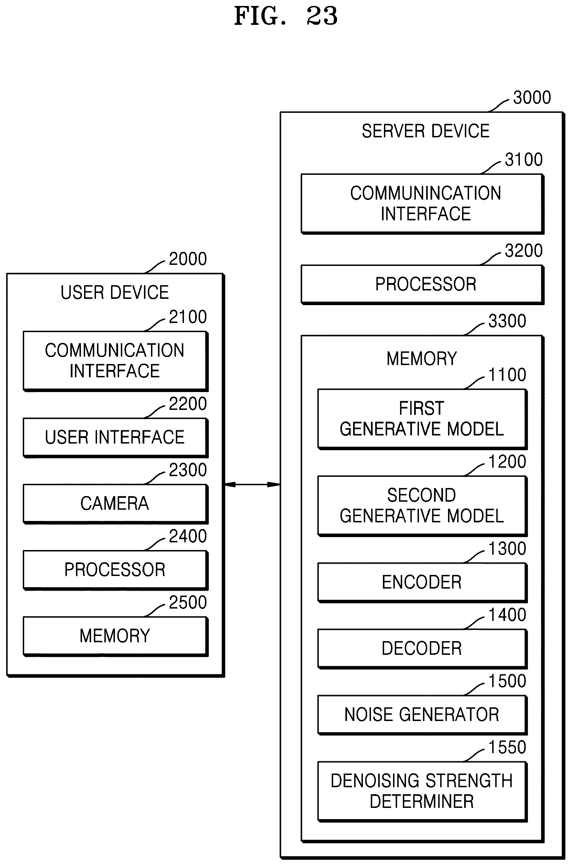

FIG. 23 is a block diagram for describing configurations of a user device and a server device, according to an embodiment of the disclosure. The same description as that made with reference to FIGS. 1 to 21 will be omitted. A configuration, a function, and an operation of the electronic device 1000 of FIGS. 1 to 11 may correspond to a configuration, a function, and an operation of a server device 3000 of FIG. 23. A configuration, a function, and an operation of the user device 2000 of FIG. 22 may correspond to a configuration, a function, and an operation of the user device 2000 of FIG. 23.

Referring to FIG. 23, the server device 3000 may include a communication interface 3100, a processor 3200, and a memory 3300. However, not all of the illustrated elements are essential elements. The server device 3000 may include more or fewer elements than those illustrated in FIG. 23.

The communication interface 3100 may include at least one element for performing communication between the server device 3000 and the user device 2000, between the server device 3000 and an arbitrary electronic device (not shown), and between the server device 3000 and an external server device (not shown).

In an embodiment of the disclosure, the server device 3000 may receive an image including a partial area (or a masked area) from the user device 2000 through the communication interface 3100. The server device 3000 may receive a mask map from the user device 2000 through the communication interface 3100. The server device 3000 may receive a text input from the user device 2000 through the communication interface 3100. The server device 3000 may receive various hyperparameters (e.g., a total denoising order) required to infer a final generated image from the user device 2000 through the communication interface 3100.

The processor 3200 may control an overall operation of the server device 3000 by using a program or information stored in the memory 3300. The processor 3200 may be implemented through a combination of software and a general-purpose processor such as an AP, a CPU, or a GPU. In the case of a dedicated processor, a memory for implementing an embodiment of the disclosure may be included, or a memory processing unit for using an external memory may be included. The processor 3200 may include a plurality of processors. In this case, the processor 3200 may be implemented through a combination of dedicated processors, or may be implemented through a combination of software and a plurality of general-purpose processors such as an AP, a CPU, and a GPU.

In an embodiment of the disclosure, the processor 3200 may include an Al processor. The Al processor may be manufactured in the form of a dedicated hardware chip for AI, or may be manufactured as a part of an existing general-purpose processor (e.g., a CPU or an AP) or a dedicated graphic processor (e.g., a graphics processing unit (GPU)) and mounted on the server device 3000. The Al processor may perform an inference and/or training operation related to at least one of the first generative model 1100, the second generative model 1200, the encoder 1300, or the decoder 1400.

In an embodiment of the disclosure, the processor 3200 may receive an image and a request signal for generating a partial area of the image from the user device 2000 through the communication interface 3100. The processor 3200 may infer a final generated image in which the partial area of the image is generated by inputting the image to the trained first generative model 1100 and/or the second generative model 1200 in response to the request signal. The processor 3200 may transmit the final generated image to the user device 2000 through the communication interface 3100. The user device 2000 may receive the final generated image. The user device 2000 may display the final generated image through the user interface 2200.

In an embodiment of the disclosure, the processor 3200 may infer a pre-designated area of the image based on image information excluding the pre-designated area of the image, by using the first generative model 1100 and/or the second generative model 1200.

In an embodiment of the disclosure, the processor 3200 may train at least one of the first generative model 1100, the second generative model 1200, the encoder 1300, or the decoder 1400 by using a training data set stored in the memory 3300. The processor 2400 may store the first generative model 1100, the second generative model 1200, the encoder 1300, and/or the decoder 1400, which is trained, in the memory 3300.

The memory 3300 may store a program for processing by the processor 3200 or may store input/output data. In an embodiment of the disclosure, the memory 3300 may include at least one type of storage medium from among a flash memory type, a hard disk type, a multimedia card micro type, a card type memory (e.g., an SD or XD memory), a random-access memory (RAM), a static random-access memory (SRAM), a read-only memory (ROM), an electrically erasable programmable read-only memory (EEPROM), a programmable read-only memory (PROM), a magnetic memory, a magnetic disk, and an optical disk. Programs stored in the memory 3300 may be classified into a plurality of modules according to their functions.

In an embodiment of the disclosure, the memory 3300 may include the first generative model 1100, the second generative model 1200, the encoder 1300, the decoder 1400, the noise generator 1500, and the denoising strength determiner 1550.

Configurations, functions, and operations of the first generative model 1100, the second generative model 1200, the decoder 1400, the noise generator 1500, and the denoising strength determiner 1550 may correspond to configurations, functions, and operations of the first generative model 1100, the second generative model 1200, the decoder 1400, the noise generator 1500, and the denoising strength determiner 1550 of FIGS. 1 to 11. The encoder 1300 may include a plurality of encoders. Configurations, functions, and operations of the plurality of encoders may correspond to configurations, functions, and operations of the first encoder to the seventh encoder 1310, 1320, 1330, 1340, 1350, 21, and 22 of FIGS. 1 to 13B. Each of the plurality of encoders may be an encoder portion of a different auto encoder.

According to an embodiment of the disclosure, at least some of functions of the server device 3000 may be performed by the user device 2000. For example, the user device 2000 may infer an intermediate generated image by using the first generative model 1100 stored in the memory 2500. The server device 3000 may receive an intermediate generated image through the communication interface 3100. The server device 3000 may infer a final generated image based on the intermediate generated image by using the second generative model 1200 stored in the memory 3300. However, this is only an example, and at least one of the first generative model 1100, the second generative model 1200, the encoder 1300, the decoder 1400, the noise generator 1500, or the denoising strength determiner 1550 may be executed by the user device 2000 or may be executed by the server device 3000.

In an embodiment of the disclosure, a method of generating a partial area of an image by using a generative model may be provided. The method may include obtaining an image including information of the partial area. The method may include obtaining an intermediate generated image including first image information about the partial area, by using a first generative model having the image including the information of the partial area as an input. The method may include obtaining a final generated image including second image information that is at least partially different from the first image information, by using a second generative model having the image including the information of the partial area and the intermediate generated image as an input.

In an embodiment of the disclosure, the obtaining of the image including the information of the partial area may include obtaining a mask map that distinguishes the partial area from an entire area of the image including the information of the partial area. The obtaining of the image including the information of the partial area may include concatenating the mask map to the image including the information of the partial area.

In an embodiment of the disclosure, the obtaining of the final generated image may include encoding the intermediate generated image. The obtaining of the final generated image may include obtaining a final generated image including second image information that is at least partially different from the first image information, by using a second generative model having the image including the information of the partial area and the encoded intermediate generated image as an input.

In an embodiment of the disclosure, the obtaining of the final generated image may include obtaining a final generated image including second image information that is at least partially different from the first image information, by using a second generative model having the image including the information of the partial area, the encoded intermediate generated image, and the intermediate generated image as an input.

In an embodiment of the disclosure, the obtaining of the final generated image may include obtaining a text input. The obtaining of the final generated image may include encoding the text input. The obtaining of the final generated image may include obtaining a final generated image including second image information that is at least partially different from the first image information, by using a second generative model having the encoded text input, the image including the information of the partial area, and the intermediate generated image as an input.

In an embodiment of the disclosure, the obtaining of the final generated image may include obtaining a final generated image including second image information that is at least partially different from the first image information, by using a second generative model having the encoded text input, the image including the information of the partial area, the intermediate generated image, and the encoded intermediate generated image as an input.

In an embodiment of the disclosure, the obtaining of the final generated image may include obtaining a denoising strength for the intermediate generated image. The obtaining of the final generated image may include adding noise to the intermediate generated image based on the denoising strength. The obtaining of the final generated image may include obtaining a final generated image including second image information that is at least partially different from the first image information, by using a second generative model having the image including the information of the partial area and the intermediate generated image to which the noise is added as an input.

In an embodiment of the disclosure, the obtaining of the denoising strength for the intermediate generated image may include obtaining a predicted confidence value based on the intermediate generated image. The obtaining of the denoising strength for the intermediate generated image may include determining the denoising strength based on at least one of the predicted confidence value, a size of the partial area, or a shape of the partial area.

In an embodiment of the disclosure, the obtaining of the final generated image may include obtaining current noise information. The obtaining of the final generated image may include concatenating the current noise information to the image including the information of the partial area. The obtaining of the final generated image may include inputting the concatenated image to the second generative model. The obtaining of the final generated image may include obtaining next noise information from the second generative model.

In an embodiment of the disclosure, the current noise information may correspond to the intermediate generated image to which the noise is added.

In an embodiment of the disclosure, the obtaining of the final generated image may include determining a target denoising order corresponding to the intermediate generated image to which the noise is added from among a predefined total denoising order, based on the denoising strength. The obtaining of the final generated image may include setting a denoising order of the current noise information as the determined target denoising order.

In an embodiment of the disclosure, the first generative model may be a generative adversarial network (GAN) model. In an embodiment of the disclosure, the second generative model may be a diffusion model.

In an embodiment of the disclosure, an electronic device may be provided. The electronic device may include a memory in which at least one instruction is stored. The electronic device may include at least one processor configured to execute the at least one instruction. The at least one processor may be configured to obtain an image including information of a partial area. The at least one processor may be configured to obtain an intermediate generated image including first image information about the partial area, by using a first generative model having the image including the information of the partial area as an input. The at least one processor may be configured to obtain a final generated image including second image information that is at least partially different form the first image information, by using a second generative model having the image including the information of the partial area and the intermediate generated image as an input.

In an embodiment of the disclosure, a method of training an encoder for encoding an image may be provided. The method may include obtaining a first image including information about a partial area from among an entire area, a second image including image information about the entire area, and text indicating the second image. The method may include obtaining first image embedding, by using a first encoder having the first image as an input. The method may include obtaining second image embedding, by using a second encoder having the second image as an input. The method may include obtaining text embedding, by using a third encoder having the text as an input. The method may include obtaining first loss based on the first image embedding and the second image embedding. The method may include obtaining second loss based on the first image embedding and the text embedding. The method may include updating at least one parameter of the first encoder based on the first loss and the second loss.

In an embodiment of the disclosure, the second encoder and the third encoder may be artificial intelligence (AI) encoders that are pre-trained and have fixed parameters.

In an embodiment of the disclosure, the method may include updating at least one parameter of the second encoder and the third encoder, based on the first loss and the second loss.

In an embodiment of the disclosure, the method may include concatenating a mask map that distinguishes the partial area from the entire area, to the first image.

In an embodiment of the disclosure, the first encoder and the second encoder may be the same encoder.

In an embodiment of the disclosure, the method may include concatenating a second mask map in which the entire area includes one value, to the second image.

In an embodiment of the disclosure, a method of generating a partial area of an image by using a generative model may be provided. The method may include obtaining an image including information of the partial area. The method may include obtaining target image embedding, by using a first encoder having the image including the information of the partial area as an input. The method may include obtaining a final generated image, by using a generative model having the image including the information of the partial area and the target image embedding as an input.

In an embodiment of the disclosure, the first encoder may be trained by obtaining a first training image including location information of the partial area from among an entire area, a second training image including image information about the entire area, and training text indicating the second training image, obtaining first image embedding by using the first encoder having the first training image as an input, obtaining second image embedding by using a second encoder having the second training image as an input, obtaining text embedding by using a third encoder having the training text as an input, obtaining first loss based on the first image embedding and the second image embedding, obtaining second loss based on the first image embedding and the text embedding, and updating at least one parameter of the first encoder based on the first loss and the second loss.

In an embodiment of the disclosure, the second encoder and the third encoder may be Al models that are pre-trained and have fixed parameters.

In an embodiment of the disclosure, the first training image may be concatenated to a first mask map that distinguishes the partial area from the entire area.

In an embodiment of the disclosure, the first encoder and the second encoder may be the same encoder.

In an embodiment of the disclosure, the second training image may be concatenated to a second mask map in which the entire area includes one value.

In an embodiment of the disclosure, the generative model may include a first neural network configured to output the final generated image based on the image including the information of the partial area.

In an embodiment of the disclosure, the method may include inputting the target image embedding to at least one layer of the first neural network.

In an embodiment of the disclosure, the generative model may include an interpreter configured to convert the target image embedding and transmit the converted target image embedding to the at least one layer of the first neural network. In the generative model, the interpreter may include at least one single-layer perceptron.

In an embodiment of the disclosure, the at least one single-layer perceptron may include a first single-layer perceptron and a second single-layer perceptron. In an embodiment of the disclosure, the interpreter may include three or more single-layer perceptrons. In an embodiment of the disclosure, the interpreter may include a unique single-layer perceptron.

In an embodiment of the disclosure, the method may include obtaining intermediate image embedding by using the first single-layer perceptron having the target image embedding as an input. The method may include obtaining resulting image embedding by using the second single-layer perceptron having the intermediate image embedding as an input. The method may include inputting the resulting image embedding to the at least one layer of the first neural network.

In an embodiment of the disclosure, the method may include allowing a next single-layer perceptron having image embedding output from a previous single-layer perceptron as an input to output next image embedding. The method may include allowing a next single-layer perceptron having image embedding output from a previous single-layer perceptron as an input to output next image embedding. The method may include obtaining resulting image embedding by using a last single-layer perceptron from among the at least one single-layer perceptron. The method may include inputting the resulting image embedding to the at least one layer of the first neural network.

In an embodiment of the disclosure, the at least one single-layer perceptron may include a unique single-layer perceptron. The method may include obtaining resulting image embedding by using the unique single-layer perceptron. The method may include inputting the resulting image embedding to the at least one layer of the first neural network.

In an embodiment of the disclosure, the generative model may include a first neural network configured to output first noise based on the image including the information of the partial area. The generative model may include a second neural network configured to output second noise based on the image including the information of the partial area. The generative model may include an interpreter configured to convert the target image embedding and transmit the converted target image embedding to at least one layer of the first neural network.

In an embodiment of the disclosure, the first neural network may be configured to output first noise by using the image including the information of the partial area and the target image embedding as an input.

In an embodiment of the disclosure, the first neural network may be configured to output first noised by using the image including the information of the partial area, the target image embedding, and an intermediate generated image as an input.

In an embodiment of the disclosure, the method may include obtaining target text corresponding to the image including the information of the partial area. The method may include obtaining target text embedding based on the target text. The method may include inputting the target text embedding to at least one layer of the second neural network.

In an embodiment of the disclosure, the second neural network may be configured to output second noise by using the image including the information of the partial area and the target text embedding as an input.

In an embodiment of the disclosure, the second neural network may be configured to output second noise by using the image including the information of the partial area, the target text embedding, and the intermediate generated image as an input.

In an embodiment of the disclosure, the method may include obtaining the final generated image based on the first noise and the second noise.

In an embodiment of the disclosure, an electronic device may be provided. The electronic device may include a memory in which at least one instruction is stored. The electronic device may include at least one processor configured to execute the at least one instruction. The at least one processor may be configured to obtain a first image including a first image including information about a partial area from among an entire area, a second image including image information about the entire area, and text indicating the second image, obtain first image embedding by using a first encoder having the first image as an input, obtain second image embedding by using a second encoder having the second image as an input, obtain text embedding by using a third encoder having the text as an input, obtain first loss based on the first image embedding and the second image embedding, obtain second loss based on the first image embedding and the text embedding, and update at least one parameter of the first encoder based on the first loss and the second loss.

A method according to an embodiment of the disclosure may be implemented as a program command executable through various computer means and may be recorded on a computer-readable medium. The computer-readable medium may include program commands, data files, and data structures separately or in combinations. The program commands recorded on the medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device specially configured to store and execute program commands such as a ROM, a random-access memory (RAM), or a flash memory. Examples of the program commands include advanced language code that may be executed by a computer by using an interpreter or the like as well as machine language code made by a compiler.

Some embodiments of the disclosure may also be realized in the form of a recording medium including instructions executable by a computer, such as a program module executed by a computer. The computer-readable medium may be an arbitrary available medium accessible by a computer, and includes all volatile and non-volatile media and separable and non-separable media. Also, the computer-readable medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium generally includes computer-readable instructions, a data structure, a program module, other data of a modulated data signal such as a carrier wave, or another transmission mechanism, and an example thereof includes an arbitrary information transmission medium. Some embodiments of the disclosure may also be implemented as a computer program or a computer program product including instructions executable by a computer, such as a computer program executed by a computer.

In an embodiment of the disclosure, a machine-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment of the disclosure, methods according to various embodiments of the disclosure may be provided in a computer program product. The computer program product may be a product purchasable between a seller and a purchaser. The computer program product may be distributed in the form of a machine-readable storage medium (e.g., a compact disc read-only memory (CD-ROM)), or distributed (e.g., downloaded or uploaded) online via an application store or between two user devices (e.g., smartphones) directly. In an example case in which the computer program product is distributed online, at least part of the computer program product (e.g., a downloadable application) may be temporarily generated or at least temporarily stored in a machine-readable storage medium, such as a memory of a server of a manufacturer, a server of an application store, or a relay server.

Although embodiments of the disclosure have been described in detail above, the scope of the disclosure is not limited thereto, and various modifications and improvements made by one of ordinary skill in the art by using the basic concept of the disclosure defined by the claims are also within the scope of the disclosure.

## Claims

1. A method of generating a partial area of an image by using a generative model, the method comprising:
obtaining an image comprising information of the partial area;
obtaining an intermediate generated image by inputting the image into a first generative model (1100), the intermediate generated image comprising firstimage information corresponding to the partial area; and
obtaining a final generated image comprising second image information by inputting the image and the intermediate generated image to a second generative model (1200), the second image information being at least partially different from the first image information.

2. The method of claim 1, wherein the obtaining of the image comprising the information of the partial area comprises:
obtaining a mask map that distinguishes the partial area from an entire area of the image; and
concatenating the mask map to the image.

3. The method of any one of claims 1 and 2, wherein the obtaining of the final generated image comprises:
encoding the intermediate generated image; and
obtaining the final generated image by inputting the image and the encoded intermediate generated image to the second generative model.

4. The method of any one of claims 1 to 3, wherein the obtaining of the final generated image comprises:
obtaining a text input;
encoding the text input; and
obtaining the final generated image by inputting the image and the intermediate generated image and the encoded text input to the second generative model.

5. The method of any one of claims 1 to 4, wherein the obtaining of the final generated image comprises:
obtaining a denoising strength for the intermediate generated image;
adding noise to the intermediate generated image based on the denoising strength; and
obtaining the final generated image by inputting the image and the intermediate generated image with the added noise to the second generative model.

6. The method of any one of claims 1 to 5, wherein the obtaining of the denoising strength for the intermediate generated image comprises:
obtaining a predicted confidence value based on the intermediate generated image; and
determining the denoising strength based on at least one of the predicted confidence value, a size of the partial area, or a shape of the partial area.

7. The method of any one of claims 1 to 6, wherein the obtaining of the final generated image comprises:
obtaining current noise information;
concatenating the image and the current noise information;
inputting the concatenated image to the second generative model; and
obtaining next noise information from the second generative model.

8. The method of any one of claims 1 to 7, wherein the obtaining of the final generated image comprises:
determining a target denoising order corresponding to the intermediate generated image with the added noise, from among a predefined total denoising order, based on the denoising strength; and
setting a denoising order of the current noise information as the determined target denoising order.

9. The method of any one of claims 1 to 8, wherein
the first generative model is a generative adversarial network (GAN) model, and
the second generative model is a diffusion model.

10. An electronic device comprising:
memory (2500; 3300) storing one or more instructions; and
at least one processor (2400; 3200),
wherein the at least one processor executes the one or more instructions stored in the memory to cause the electronic device to:
obtain an image comprising information of the partial area,
obtain an intermediate generated image by inputting the image into a first generative model (1100), the intermediate generated image comprising firstimage information corresponding to the partial area, and
obtain a final generated image comprising second image information by inputting the image and the intermediate generated image to a second generative model (1200), the second image information being at least partially different from the first image information.

11. The electronic device of claim 10, wherein the at least one processor executes the one or more instructions stored in the memory to further cause the electronic device to:
obtain a mask map that distinguishes the partial area from an entire area of the image, and
concatenate the mask map to the image.

12. The electronic device of any one of claims 10 and 11, wherein the at least one processor executes the one or more instructions stored in the memory to further cause the electronic device to:
encode the intermediate generated image, and
obtain the final generated image by inputting the image and the encoded intermediate generated image to the second generative model.

13. The electronic device of any one of claims 10 to 12, wherein the at least one processor executes the one or more instructions stored in the memory to further cause the electronic device to:
obtain a text input,
encode the text input, and
obtain the final generated image by inputting the image and the intermediate generated image and the encoded text input to the second generative mode.

14. The electronic device of any one of claims 10 to 13, wherein the at least one processor executes the one or more instructions stored in the memory to further cause the electronic device to:
obtain a denoising strength for the intermediate generated image,
add noise to the intermediate generated image based on the denoising strength, and
obtain the final generated image by inputting the image and the intermediate generated image with the added noise to the second generative model.

15. A computer-readable recording medium having recorded thereon a program for performing the method any one of claims 1 and 9 on a computer.
